# EUROPEAN PATENT APPLICATION

(11) **EP 4 554 172 A1**
(43) Date of publication of application: **14.05.2025**
(21) Application number: 23835699.2
(22) Date of filing: 07.06.2023
(51) Int. Cl.: H04L 41/16, G06N 3/098, H04L 41/14, H04L 67/14, H04W 88/14

(54) **FEDERATED LEARNING**

(30) Priority: 07.07.2022 US 202263358871 P
(71) Applicant: LG Electronics Inc., Yeongdeungpo-gu Seoul 07336 (KR)
(72) Inventor: KIM, Jaewoo, Seoul 06772 (KR); KIM, Laeyoung, Seoul 06772 (KR); YOUN, Myungjune, Seoul 06772 (KR)
(74) Representative: Plasseraud IP
(86) International application number: PCT/KR2023/007744
(87) International publication number: WO 2024/010230

(57) **Abstract**

Disclosed in the present specification is a communication method for NFs related to AI and ML. The method may comprise the steps of: receiving, from an AI/ML AS, a request message requesting assistance information; transmitting, to an SMF, a subscription request message requesting to subscribe an event related to MA PDU session information; receiving the MA PDU session information from the SMF; and determining assistance information.

## Description

### TECHNICAL FIELD

The present specification relates to a mobile communication.

### BACKGROUND ART

3rd Generation Partnership Project (3GPP) Long-Term Evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in International Telecommunication Union (ITU) and 3GPP to develop requirements and specifications for New Radio (NR) systems. 3GPP has to identify and develop the technology components needed for successfully standardizing the new RAT timely satisfying both the urgent market needs, and the more long-term requirements set forth by the ITU Radio communication sector (ITU-R) International Mobile Telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced Mobile BroadBand (eMBB), massive Machine Type Communications (mMTC), Ultra-Reliable and Low Latency Communications (URLLC), etc. The NR shall be inherently forward compatible.

There is an ongoing discussion about Federated Learning (FL). However, until now, there has been no efficient way to perform the behaviors involved in FL.

### DISCLOSURE

### TECHNICAL SOLUTION

In one aspect, a method is provided for NFs associated with an AI and ML to perform communication. The method may include: receiving a request message from an AI/ML AS requesting support information; sending a request message to an SMF requesting to subscribe to an event associated with the MA PDU session information; receiving the MA PDU session information from the SMF; and determining support information based on the MA PDU session information.

In another aspect, an apparatus implementing the above method is provided.

In one aspect, a method of performing a communication by a UE is provided. The method may include: transmitting a PDU session establishment request message to an SMF to establish a PDU; and receiving a PDU session establishment acceptance message from the SMF.

In another aspect, an apparatus implementing the above method is provided.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 shows an example of 5G system architecture to which implementations of the present disclosure is applied.
FIGS. 5 and 6 show an example of a PDU session establishment procedure to which implementations of the present disclosure is applied.
FIG. 7 shows an example in which an MA PDU session is generated.
FIG. 8 shows an example of applying the ATSSS rule to the MA PDU session.
FIG. 9 shows an example of split AI/ML according to an embodiment of the disclosure of the present specification.
FIG. 10 shows an example of AI/ML model deployment according to an embodiment of the disclosure of the present specification.
FIG. 11 shows an example of AI/ML model deployment according to an embodiment of the disclosure of the present specification.
FIG. 12 is an example of a procedure for providing 5GS assistance informationfor federated learning behavior, according to one embodiment of the present disclosure.
FIG. 13a and FIG. 13b are example procedures for establishing a VN group by anAF, according to one embodiment of the present disclosure.
FIG. 14 is an example of a structure of an MA PDU session, according to one embodiment of the present disclosure.
FIGS. 15a and 15b illustrate one example of a procedure for providing 5GS support information for federated learning operation.
FIG. 16 illustrates an example of a procedure for providing support information based on MA PDU session information, in accordance with one embodiment of the present disclosure.

### MODE FOR INVENTION

The following techniques, apparatuses, and systems may be applied to a variety of wireless multiple access systems. Examples of the multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi Carrier Frequency Division Multiple Access (MC-FDMA) system. CDMA may be embodied through radio technology such as Universal Terrestrial Radio Access (UTRA) or CDMA2000. TDMA may be embodied through radio technology such as Global System for Mobile communications (GSM), General Packet Radio Service (GPRS), or Enhanced Data rates for GSM Evolution (EDGE). OFDMA may be embodied through radio technology such as Institute of Electrical and Electronics Engineers (IEEE) 802.11 (Wi-Fi), IEEE 802.16 (WiMAX), IEEE 802.20, or Evolved UTRA (E-UTRA). UTRA is a part of a Universal Mobile Telecommunications System (UMTS). 3rd Generation Partnership Project (3GPP) Long-Term Evolution (LTE) is a part of Evolved UMTS (E-UMTS) using E-UTRA. 3GPP LTE employs OFDMA in downlink (DL) and SC-FDMA in uplink (UL). Evolution of 3GPP LTE includes LTE-Advanced (LTE-A), LTE-A Pro, and/or 5G New Radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

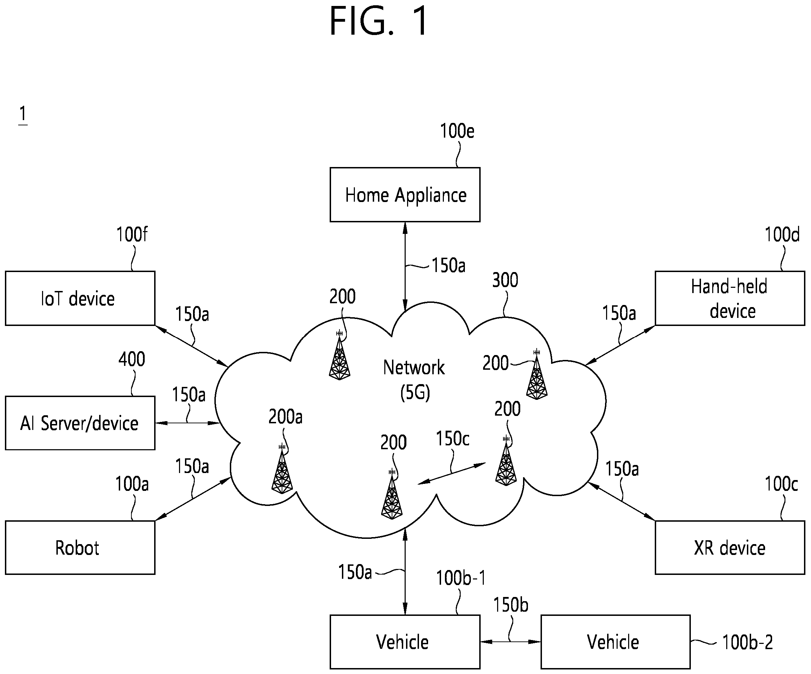

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced Mobile BroadBand (eMBB), (2) a category of massive Machine Type Communication (mMTC), and (3) a category of Ultra-Reliable and Low Latency Communications (URLLC).

Referring to FIG. 1, the communication system 1 includes wireless devices 100a to 100f, Base Stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using Radio Access Technology (RAT) (e.g., 5G NR or LTE) and may be referred to as communication/radio/5G devices. The wireless devices 100a to 100f may include, without being limited to, a robot 100a, vehicles 100b-1 and 100b-2, an eXtended Reality (XR) device 100c, a hand-held device 100d, a home appliance 100e, an Internet-of-Things (IoT) device 100f, and an Artificial Intelligence (AI) device/server 400. For example, the vehicles may include a vehicle having a wireless communication function, an autonomous driving vehicle, and a vehicle capable of performing communication between vehicles. The vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called User Equipments (UEs). A UE may include, for example, a cellular phone, a smartphone, a laptop computer, a digital broadcast terminal, a Personal Digital Assistant (PDA), a Portable Multimedia Player (PMP), a navigation system, a slate Personal Computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or Device-to-Device (D2D) communication) 150b, inter-base station communication 150c (e.g., relay, Integrated Access and Backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple Sub-Carrier Spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., Frequency Range 1 (FR1) and Frequency Range 2 (FR2). The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter Wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include NarrowBand IoT (NB-IoT) technology for low-power communication as well as LTE, NR and 6G. For example, NB-IoT technology may be an example of Low Power Wide Area Network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced MTC (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate Personal Area Networks (PANs) associated with small/low-power digital communication based on various specifications such as IEEE 802.15.4 and may be called various names.

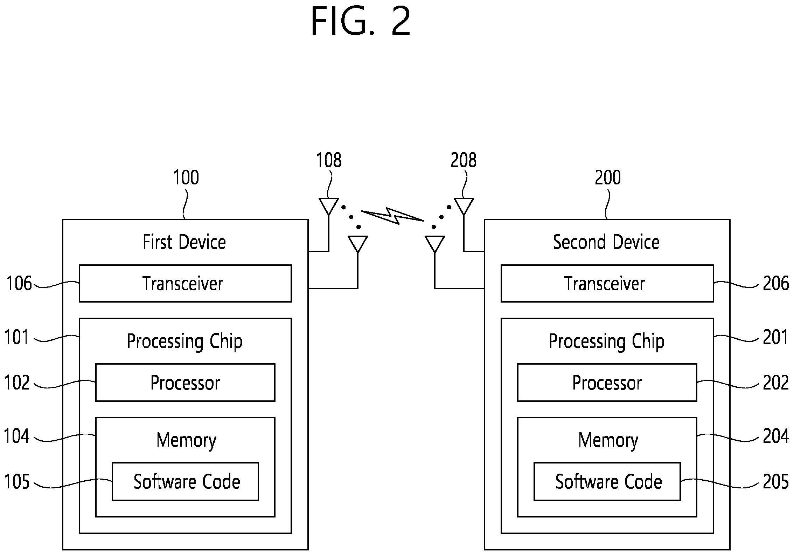

FIG. 2 shows an example of wireless devices to which implementations of the present disclosure is applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and downconvert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

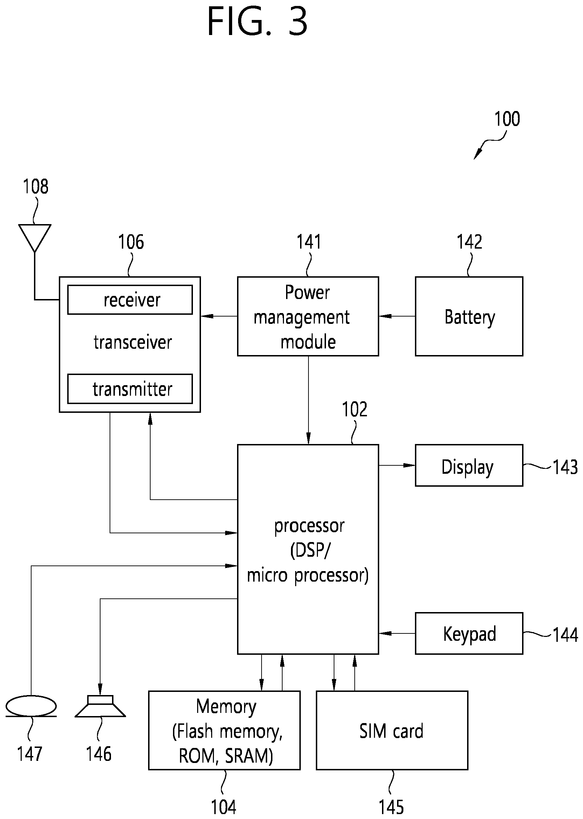

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information related to many SIM cards.

The speaker 146 outputs sound-related results processed by the processor 102. The microphone 147 receives sound-related inputs to be used by the processor 102.

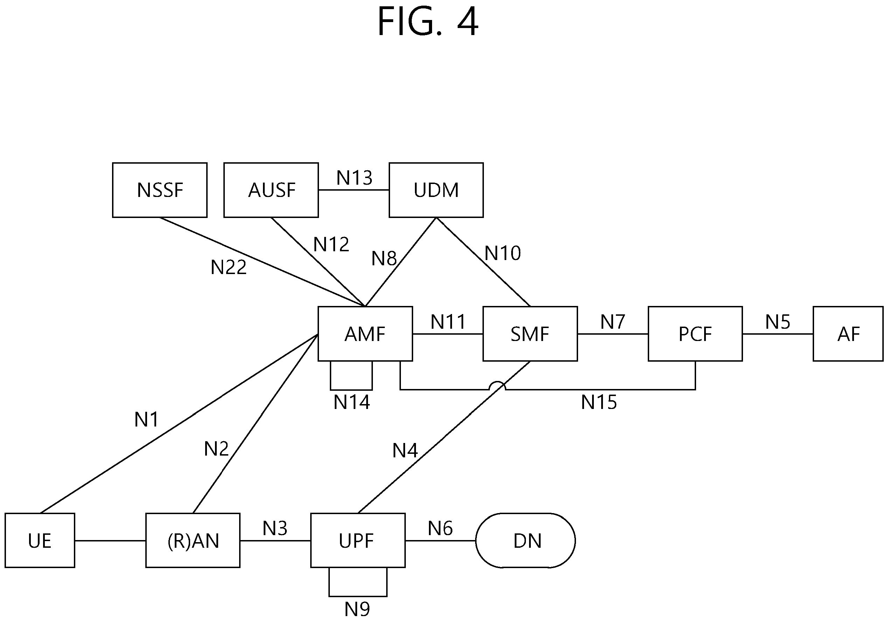

FIG. 4 shows an example of 5G system architecture to which implementations of the present disclosure is applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio)Access Network ((R)AN)
- 5G-Equipment Identity Register (5G-EIR)
- Network Data Analytics Function (NWDAF)
- CHarging Function (CHF)
- Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

PDU session establishment procedure is described. Section 4.3.2 of 3GPP TS 23.502 V16.3.0 (2019-12) can be referenced.

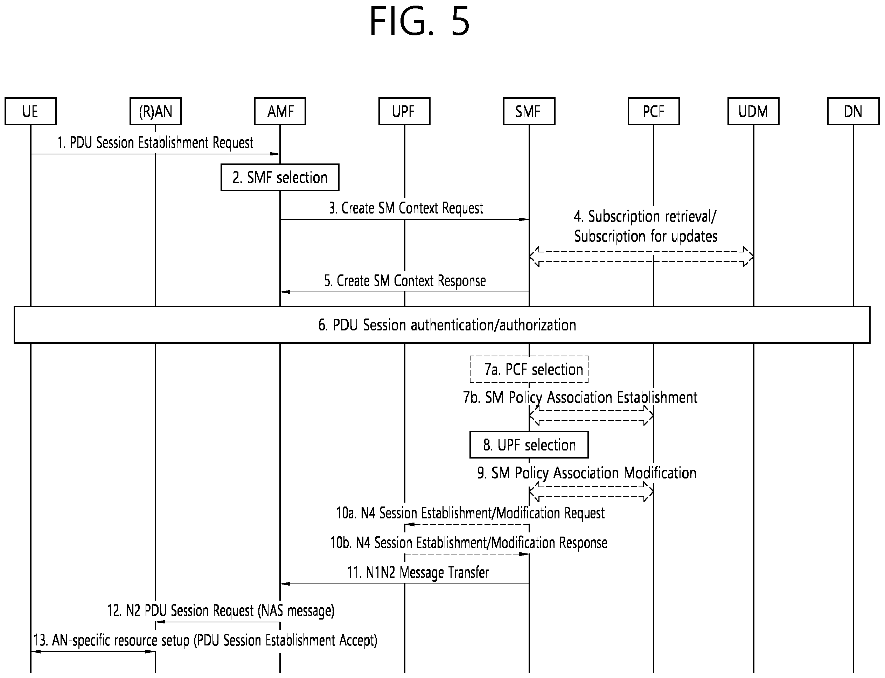

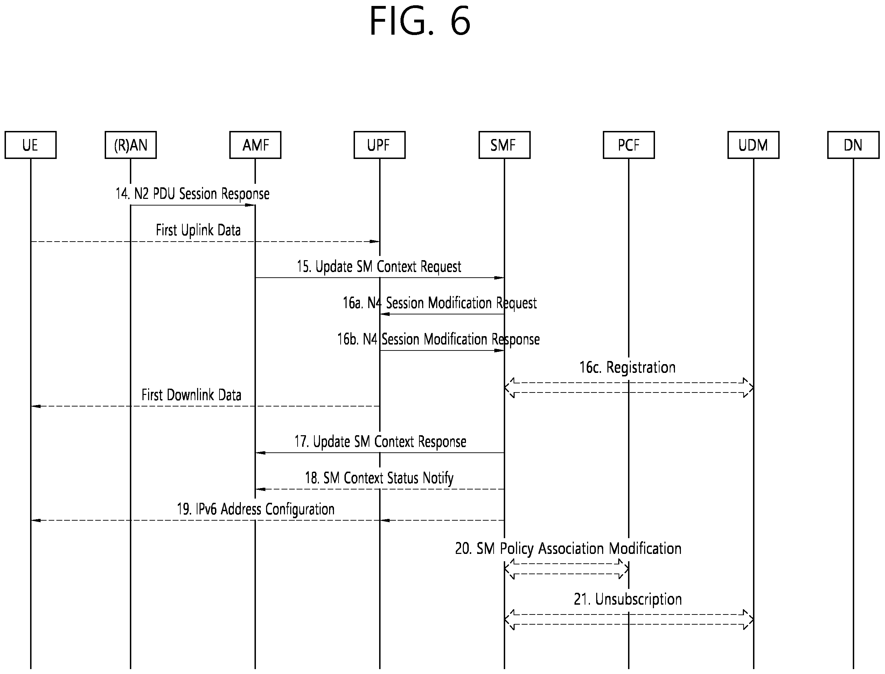

**FIGS. 5** **and** **6** **show an example of a PDU session establishment procedure to which implementations of the present disclosure is applied.**

A PDU session establishment may correspond to:
- a UE initiated PDU session establishment procedure.
- a UE initiated PDU session handover between 3GPP and non-3GPP.
- a UE initiated PDU session handover from EPS to 5GS.
- a network triggered PDU session establishment procedure.

A PDU session may be associated either (a) with a single access type at a given time, i.e., either 3GPP access or non-3GPP access, or (b) simultaneously with multiple access types, i.e., one 3GPP access and one non-3GPP access. A PDU session associated with multiple access types is referred to as multi access PDU (MA PDU) session and it may be requested by access traffic steering, switching, splitting (ATSSS)-capable UEs.

FIGS. 5 and 6 specify the procedures for establishing PDU sessions associated with a single access type at a given time.

The procedure shown in FIGS. 5 and 6 assumes that the UE has already registered on the AMF thus unless the UE is emergency registered the AMF has already retrieved the user subscription data from the UDM.

First, procedures of FIG. 5 are described.
(1) Step 1: In order to establish a new PDU session, the UE generates a new PDU session ID.

The UE initiates the UE requested PDU session establishment procedure by the transmission of a NAS message containing a PDU Session Establishment Request message within the N1 SM container. The PDU Session Establishment Request message includes a PDU session ID, Requested PDU Session Type, a Requested session and service continuity (SSC) mode, 5GSM Capability, protocol configuration options (PCO), SM PDU DN Request Container, UE Integrity Protection Maximum Data Rate, etc.

The Request Type indicates "Initial request" if the PDU session establishment is a request to establish a new PDU session and indicates "Existing PDU Session" if the request refers to an existing PDU session switching between 3GPP access and non-3GPP access or to a PDU session handover from an existing packet data network (PDN) connection in EPC. The Request Type indicates "Emergency Request" if the PDU session establishment is a request to establish a PDU session for emergency services. The Request Type indicates "Existing Emergency PDU Session" if the request refers to an existing PDU session for emergency services switching between 3GPP access and non-3GPP access or to a PDU session handover from an existing PDN connection for emergency services in EPC.

The UE includes the S-NSSAI from the Allowed NSSAI of the current access type. If the Mapping of Allowed NSSAI was provided to the UE, the UE shall provide both the S-NSSAI of the visited PLMN (VPLMN) from the Allowed NSSAI and the corresponding S-NSSAI of the HPLMN from the Mapping Of Allowed NSSAI.

(2) Step 2: The AMF selects an SMF. If the Request Type indicates "Initial request" or the request is due to handover from EPS or from non-3GPP access serving by a differentAMF, theAMF stores an association of the S-NSSAI(s), the data network name (DNN), the PDU session ID, the SMF ID as well as the Access Type of the PDU session.

If the Request Type is "initial request" and if the Old PDU session ID indicating the existing PDU session is also contained in the message, the AMF selects an SMF and stores an association of the new PDU Session ID, the S-NSSAI(s), the selected SMF ID as well as Access Type of the PDU Session.

If the Request Type indicates "Existing PDU Session", the AMF selects the SMF based on SMF-ID received from UDM. The AMF updates the Access Type stored for the PDU session.

If the Request Type indicates "Existing PDU Session" referring to an existing PDU session moved between 3GPP access and non-3GPP access, then if the serving PLMN S-NSSAI of the PDU session is present in the Allowed NSSAI of the target access type, the PDU session establishment procedure can be performed in the following cases:
- the SMF ID corresponding to the PDU session ID and the AMF belong to the same PLMN;
- the SMF ID corresponding to the PDU session ID belongs to the HPLMN,

Otherwise the AMF shall reject the PDU session establishment request with an appropriate reject cause.

The AMF shall reject a request coming from an emergency registered UE and the Request Type indicates neither "Emergency Request" nor "Existing Emergency PDU Session".

(3) Step 3: If the AMF does not have an association with an SMF for the PDU session ID provided by the UE (e.g., when Request Type indicates "initial request"), the AMF invokes Create SM Context Request procedure (e.g., Nsmf_PDUSession_CreateSMContext Request). If the AMF already has an association with an SMF for the PDU session ID provided by the UE (e.g., when Request Type indicates "existing PDU Session"), the AMF invokes Update SM Context Request procedure (e.g., Nsmf_PDUSession_UpdateSMContext Request).

The AMF sends the S-NSSAI of the serving PLMN from the Allowed NSSAI to the SMF. For roaming scenario in local breakout (LBO), the AMF also sends the corresponding S-NSSAI of the HPLMN from the Mapping Of Allowed NSSAI to the SMF.

The AMF ID is the UE's GUAMI which uniquely identifies the AMF serving the UE. The AMF forwards the PDU session ID together with the N1 SM container containing the PDU Session Establishment Request message received from the UE. The generic public subscription identifier (GPSI) shall be included if available at AMF.

The AMF provides the PEI instead of the SUPI when the UE in limited service state has registered for emergency services without providing a SUPI. In case the UE in limited service state has registered for Emergency services with a SUPI but has not been authenticated, the AMF indicates that the SUPI has not been authenticated. The SMF determines that the UE has not been authenticated when it does not receive a SUPI for the UE or when the AMF indicates that the SUPI has not been authenticated.

The AMF may include a PCF ID in the Nsmf_PDUSession_CreateSMContext Request. This PCF ID identifies the home PCF (H-PCF) in the non-roaming case and the visited PCF (V-PCF) in the LBO roaming case.

(4) Step 4: If session management subscription data for corresponding SUPI, DNN and S-NSSAI of the HPLMN is not available, then SMF may retrieve the session management subscription data from the UDM and subscribes to be notified when this subscription data is modified.

(5) Step 5: The SMF transmits either Create SM Context Response message (e.g., Nsmf_PDUSession_CreateSMContext Response) or Update SM Context Response message (e.g., Nsmf_PDUSession_UpdateSMContext Response) to the AMF, depending on the request received in step 3.

If the SMF received Nsmf_PDUSession_CreateSMContext Request in step 3 and the SMF is able to process the PDU session establishment request, the SMF creates an SM context and responds to the AMF by providing an SM Context ID.

When the SMF decides to not accept to establish a PDU session, the SMF rejects the UE request via NAS SM signaling including a relevant SM rejection cause by responding to the AMF with Nsmf_PDUSession_CreateSMContext Response. The SMF also indicates to the AMF that the PDU session ID is to be considered as released, the SMF proceeds to step 20 below and the PDU session establishment procedure is stopped.

(6) Step 6: Optional secondary authentication/authorization may be performed.

(7a) Step 7a: If dynamic policy and charging control (PCC) is to be used for the PDU session, the SMF may perform PCF selection.

(7b) Step 7b: The SMF may perform an SM Policy Association Establishment procedure to establish an SM Policy association with the PCF and get the default PCC rules for the PDU session.

(8) Step 8: The SMF selects one or more UPFs.

(9) Step 9: The SMF may perform an SMF initiated SM Policy Association Modification procedure to provide information related to the policy control request trigger condition(s) that have been met.

(10) Step 10: If Request Type indicates "initial request", the SMF may initiate an N4 Session Establishment procedure with the selected UPF. Otherwise, the SMF may initiate an N4 Session Modification procedure with the selected UPF

In step 10a, the SMF may send an N4 Session Establishment/Modification Request to the UPF and provides packet detection, enforcement and reporting rules to be installed on the UPF for this PDU session. In step 10b, the UPF may acknowledge by sending an N4 Session Establishment/Modification Response.

(11) Step 11: The SMF transmits a N1N2Message Transfer message (e.g., Namf_Communication_N1N2MessageTransfer) to the AMF.

The N1N2Message Transfer message may include N2 SM information. The N2 SM information carries information that the AMF shall forward to the (R)AN which may include:
- The CN Tunnel Info: Core network address(es) of the N3 tunnel corresponding to the PDU session;
- One or multiple quality of service (QoS) profiles and the corresponding QoS flow IDs (QFIs);
- The PDU session ID: indicate to the UE the association between (R)AN resources and a PDU session for the UE.
- S-NSSAI with the value for the serving PLMN (i.e., the HPLMN S-NSSAI or, in LBO roaming case, the VPLMN S-NSSAI).
- User Plane Security Enforcement information determined by the SMF.
- If the User Plane Security Enforcement information indicates that integrity protection is "Preferred" or "Required(or Mandatory)", the SMF also includes the UE Integrity Protection Maximum Data Rate as received in the PDU Session Establishment Request message.
- Redundancy sequence number (RSN) parameter

The N1N2Message Transfer message may include N1 SM container. The N1 SM container contains the PDU Session Establishment Accept message that the AMF shall provide to the UE. The PDU Session Establishment Accept message includes S-NSSAI from the Allowed NSSAI. For LBO roaming scenario, the PDU Session Establishment Accept message includes the S-NSSAI from the Allowed NSSAI for the VPLMN and also it includes the corresponding S-NSSAI of the HPLMN from the Mapping Of Allowed NSSAI that SMF received in step 3.

Multiple QoS Rules, QoS flow level, QoS parameters if needed for the QoS Flow(s) associated with those QoS rule(s) and QoS Profiles may be included in the PDU Session Establishment Accept message within the N1 SM container and in the N2 SM information.

If the PDU session establishment failed anywhere between step 5 and step 11, then the N1N2Message Transfer message shall include the N1 SM container with a PDU Session Establishment Reject message and shall not include any N2 SM information. The (R)AN sends the NAS message containing the PDU Session Establishment Reject message to the UE. In this case, steps 12-17 are skipped.

(12) Step 12: The AMF sends the NAS message containing PDU Session ID and PDU Session Establishment Accept message targeted to the UE and the N2 SM information received from the SMF within the N2 PDU Session Request message to the (R)AN.

(13) Step 13: The (R)AN may issue AN specific signaling exchange with the UE that is related with the information received from SMF. For example, in case of a NG-RAN, an RRC connection reconfiguration may take place with the UE establishing the necessary NG-RAN resources related to the QoS rules for the PDU session request received in step 12.

The (R)AN forwards the NAS message (PDU Session ID, N1 SM container (PDU Session Establishment Accept message)) provided in step 12 to the UE. The (R)AN shall only provide the NAS message to the UE if the AN specific signaling exchange with the UE includes the (R)AN resource additions associated to the received N2 command.

If the N2 SM information is not included in the step 11, then the following steps 14 to 16b and step 17 are omitted.

Now, procedures of FIG. 6, which follow the procedures of FIG. 5, are described.

(14) Step 14: The (R)AN transmits a N2 PDU Session Response message to the AMF. The N2 PDU Session Response message may include PDU session ID, Cause, N2 SM information (PDU Session ID, AN Tunnel Info, List of accepted/rejected QFI(s), User Plane Enforcement Policy Notification)), etc.

(15) Step 15: The AMF transmits an Update SM Context Request message (e.g., Nsmf_PDUSession_UpdateSMContext Request) to the SMF. The AMF forwards the N2 SM information received from (R)AN to the SMF.

(16a) Step S16a: The SMF initiates an N4 Session Modification procedure with the UPF. The SMF provides AN Tunnel Info to the UPF as well as the corresponding forwarding rules.

(16b) Step S16b: The UPF provides an N4 Session Modification Response to the SMF.

After this step, the UPF may deliver any DL packets to the UE that may have been buffered for this PDU session.

(16c) Step 16c: If the SMF has not yet registered for this PDU session, then the SMF may register with the UDM for a given PDU Session.

(17) Step 17: The SMF transmits an Update SM Context Response message (e.g., Nsmf_PDUSession_UpdateSMContext Response) to the AMF.

After this step, the AMF forwards relevant events subscribed by the SMF.

(18) Step 18: If during the procedure, any time after step 5, the PDU session establishment is not successful, the SMF may inform the AMF by invoking Nsmf_PDUSession_SMContextStatusNotify (Release). The SMF may also release any N4 session(s) created, any PDU session address if allocated (e.g., IP address) and release the association with PCF, if any. In this case, step 19 is skipped.

(19) Step 19: In the case of PDU Session Type IPv6 or IPv4v6, the SMF may generate an IPv6 Router Advertisement and send it to the UE.

(20) Step 20: The SMF may perform SMF initiated SM Policy Association Modification.

(21) Step 21: If the PDU Session establishment failed after step 4, the SMF may unsubscribe to the modifications of session management subscription data, if the SMF is no more handling a PDU session of the UE.

### <Multi-Access (MA) PDU session>

In the prior art, the MA PDU session is a session that can be serviced simultaneously with 3GPP access and non-3GPP access using one PDU session.

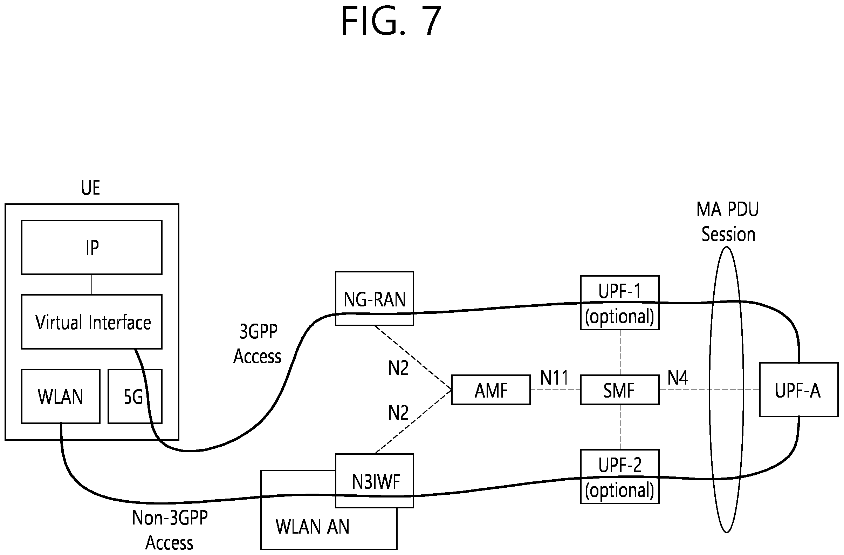

FIG. 7 shows an example in which a MA PDU session is generated.

In FIG. 7, the MA PDU session is one PDU session and has a separate session tunnel for each access. One is established on 3GPP access, and the other PDU session is established on untrusted non-3GPP access (e.g., WLAN AN).

Since the MA PDU session is one session, the MA PDU session has the following characteristics.
(i) one DNN,
(ii) one UPF Anchor (UPF-A),
(iii) one PDU type (e.g., IPv6);
(iv) one session IP address
(v) one SSC mode
(vi) one HPLMN S-NSSAI.

The MA PDU session enables a multipath data link between the UE and UPF-A. This can be implemented below the IP layer.

A MA PDU session may be established through one of the following procedures.
(i) It can be established through two separate PDU session establishment procedures. This is called individual establishment.
(ii) It may be established through one MA PDU session establishment procedure. That is, the MA PDU session is simultaneously established in two accesses with one session establishment request. This is called binding establishment.

After the MA PDU session is established, Session Management (SM) signaling related to the MA PDU session may be transmitted and received through random access.

### A. Individual establishment of MA PDU session

A MA PDU session may be established through two separate PDU session establishment procedures. For example, the UE may establish a MA PDU session on 3GPP access, and then perform a PDU session establishment procedure on non-3GPP access in order to add non-3GPP access to the MA PDU session created on 3GPP access. The request type in the establishment request message for adding the second access may be set to "MA PDU Request".

### B. Binding establishment.

A MA PDU session may be simultaneously established for 3GPP access and non-3GPP access through one procedure. Such one procedure may be referred to as a MA PDU session establishment procedure by UE request. The above procedure may be useful when the UE intends to establish a MA PDU session while the UE is already registered with 5GC through two accesses. Instead of performing two separate PDU session establishment procedures, the UE may establish a MA PDU session by performing one MA PDU session establishment procedure.

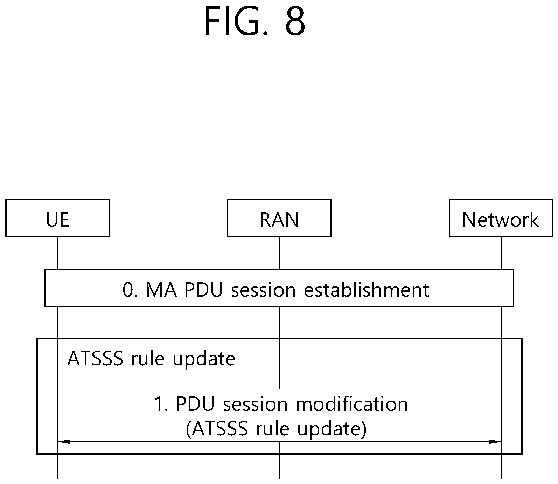

FIG. 8 shows an example of applying the ATSSS rule to the MA PDU session.

Referring to FIG. 8 , if the SMF wants to move an IP flow transmitted to non-3GPP access to 3GPP access in a state in which a multi-access (MA) PDU session is established, through 3GPP access, updated ATSSS (Access Traffic Steering, Switching and Splitting) rules can be transmitted.

### <Artificial Intelligence (AI)/Machine Learning (ML) based service>

In 3GPP, a plan to support AL/ML-based services in 5GS is being discussed.

For example, with 5GS assistance, mtehods are being discussed to enable AI/ML services and transport to support AI/ML model distribution, transfer, and training for various applications. For example, various applications may include image/voice recognition, robot control, automobiles, and the like.

AI/ML operations can include, for example, three main types:
- AI/ML operation splitting between AI/ML endpoints
- AI/ML model/data distribution and sharing over 5G system
- Distributed/Federated Learning (FL) over 5G system

In order to provide intelligent transmission support for application layer AI/ML tasks, the following examples below illustrate the goals of how AI/ML service providers can utilize 5GS as a platform.
1. Objective 1: Study possible architecture and functional extensions to support application-layer AI/ML tasks.
   a. To support Application AI/ML operation together with AI/ML model providers, it supports monitoring network resource utilization in 5G systems related to UEs.
   b. 5GS information exposure extensions to 5GC NF(s) to expose UE and/or network health and performance predictions (e.g., location, QoS, load, congestion, etc.). Support whether and how to expose this information to the UE and/or authorized third parties to support application AI/ML operation.
   c. Enhancements of external parameter provisioning for 5GC based on application AI/ML operation (e.g., expected UE activity behaviors, expected UE mobility, etc.).
   d. Investigate enhancements to other 5GC features that can be used to support application AI/ML operations.
2. Objective 2: Study possible QoS and policy enhancements to support application AI/ML operational traffic while supporting normal (non-application AI/ML) 5GS user traffic.
3. Objective 3: Study whether and how 5GS provides assistance to AF and the UE for the AF and UE to manage the FL operation and model distribution/redistribution (i.e. FL members selection, group performance monitoring, adequate network resources allocation and guarantee.). In order to to facilitate collaborative Application AI/ML based Federated Learning operation between the application clients running on the UEs and the Application Servers, these studies can be conducted.

All UEs participating in a given Application AI/ML task can receive service by the same S-NSSAI as AF.

The following examples are examples of three main AI/ML operations.

Artificial intelligence (AI)/machine learning (ML) is being used in a variety of applications across industries. In mobile communication systems, mobile devices (e.g., smartphones, cars, robots) are increasingly replacing traditional algorithms (e.g., speech recognition, image recognition, video processing) with AI/ML models to enable applications.

A 5G system can support at least three types of AI/ML tasks. The examples below represent three types of AI/ML tasks:
- AI/ML operation splitting between AI/ML endpoints;
- AI/ML model/data distribution and sharing over 5G system;
- Distributed/Federated Learning over 5G system;

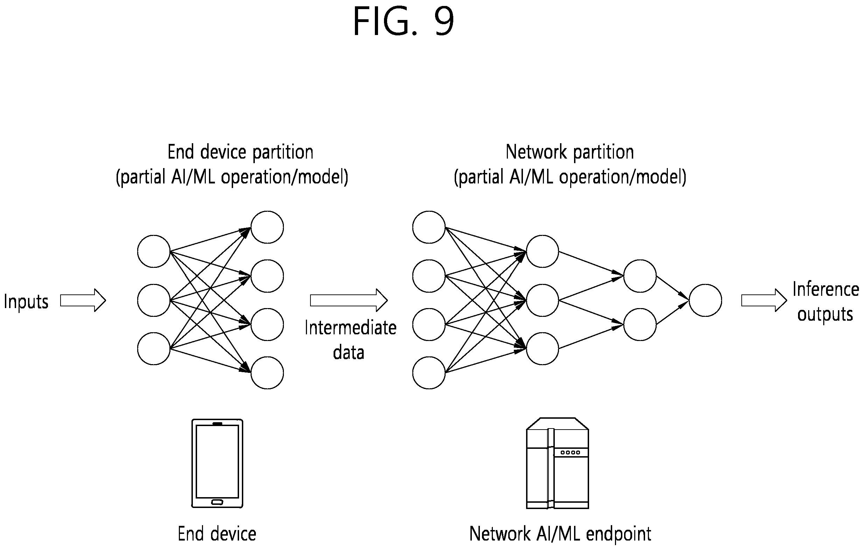

The example of FIG. 9 shows an example of AI/ML job splitting between AI/ML endpoints.

The following drawings were created to explain a specific example of the present specification. Since the names of specific devices described in the drawings or the names of specific signals/messages/fields are presented by way of example, the technical features of the present specification are not limited to the specific names used in the following drawings.

FIG. 9 shows an example of split AI/ML according to an embodiment of the disclosure of the present specification.

A split AI/ML inference method may be represented as shown in FIG. 9. The AI/ML job/model is split into several parts depending on the current job and environment. The computation-intensive and energy-intensive parts can be offloaded to the network endpoint, while the privacy-sensitive and latency-sensitive parts can be left on the end device. A device can execute a task/model up to a specific part/layer and then transmit intermediate data to a network endpoint. The network endpoint can execute the rest of the parts/layers and feed the inference results back to the device.

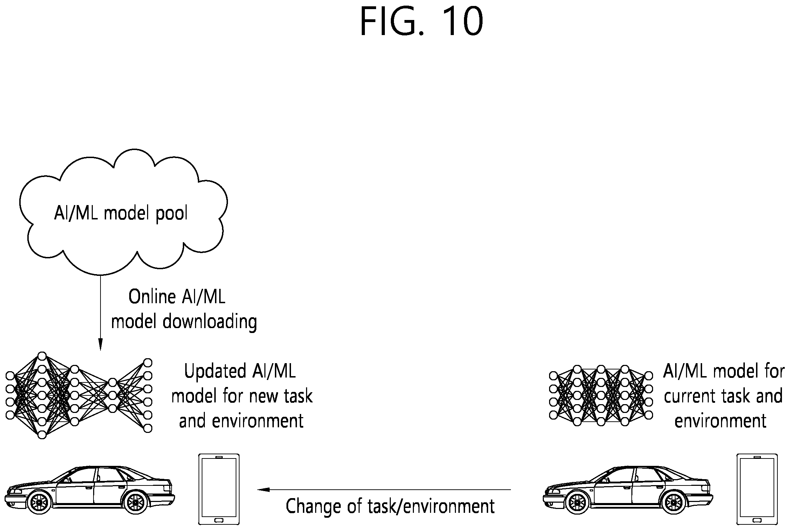

The example in FIG. 10 shows an example of AI/ML model/data distribution and sharing via a 5G system.

The following drawings were created to explain a specific example of the present specification. Since the names of specific devices described in the drawings or the names of specific signals/messages/fields are presented by way of example, the technical features of the present specification are not limited to the specific names used in the following drawings.

FIG. 10 shows an example of AI/ML model deployment according to an embodiment of the disclosure of the present specification.

The AI/ML model distribution method may be represented as shown in FIG. 10. Multi-functional mobile terminals may need to switch AI/ML models as jobs and environments change. A condition of the adaptive model selection may be that the model to be selected is available for the mobile device. However, due to the fact that AI/ML models are becoming increasingly diverse and the UE's limited storage resources, it may be decided not to preload all candidate AI/ML models onboard. Online model deployment (i.e., downloading new models) may be required, through which AI/ML models can be deployed from NW endpoints to devices as needed to adapt to changed AI/ML tasks and environments. For this, it may be necessary to continuously monitor the model performance at the UE.

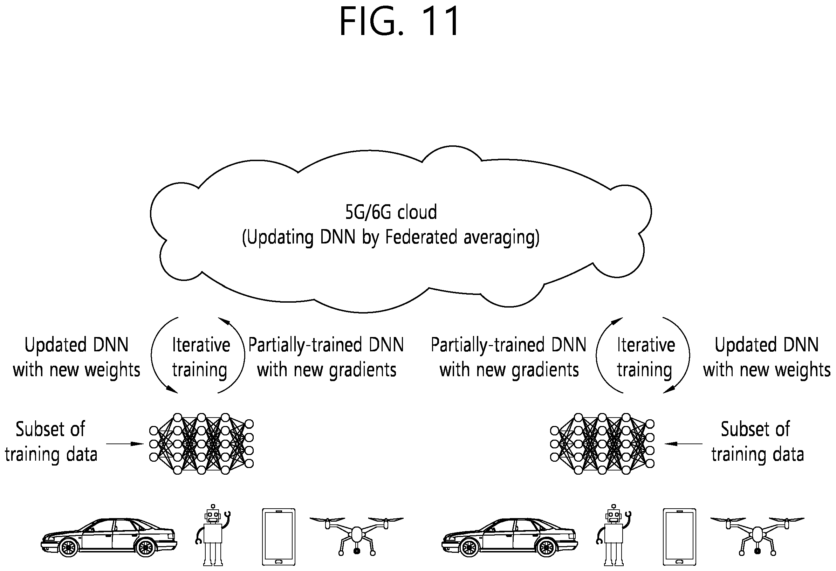

The example of FIG. 11 shows an example of distributed/federated learning through a 5G system.

The following drawings were created to explain a specific example of the present specification. Since the names of specific devices described in the drawings or the names of specific signals/messages/fields are presented by way of example, the technical features of the present specification are not limited to the specific names used in the following drawings.

FIG. 11 shows an example of AI/ML model deployment according to an embodiment of the disclosure of the present specification.

An example of a system of Federated Learning (FL) may be depicted as shown in FIG. 11 .

The cloud server can train the global model by aggregating the partially trained local model on each end device. Within each training iteration, the UE can perform training based on the model downloaded from the AI server, using local training data. Then, the UE may report the intermediate training result to the cloud server through the 5G UL channel. The server may aggregate the intermediate training results of the UE and update the global model. Then the updated global model is deployed back to the UE and the UE can perform training for the next iteration.

The present disclosure may be implemented in one or more combinations, such as combinations comprising at least one of those described below. While each of the figures illustrates an embodiment of each disclosure, embodiments of the figures may be implemented in combination with each other.

A description of a scheme proposed by the present disclosure may comprise any combination of one or more of the actions/compositions/steps described below. The following methods described below may be performed or used combinatorially or complementarily.

5GS support for FL operations may be discussed, e.g., 5GS Assistance to Federated Learning Operation.

On the other hand, in 5G, support for Artificial Intelligence (AI)/Machine Learning (ML) based services is being discussed. Application Functions (AFs) such as Application Server (AS) can perform Federated Learning (FL) operation. However, there has been no way for the 5G System (5GS) to support these AFs to perform FL operations. For example, there has been no specific discussion of how the 5GS can provide assistance information to these AFs, nor has there been any discussion of how the AFs can request assistance information from the 5GS.

For example, it needs to be discussed how the 5GS will provide support information to assist the AF in selecting UEs for FL behavior. It also needs to be discussed what information the 5GS will receive from the AF and what information the 5GS will provide to the AF. Furthermore, in order for the 5GS to support FL behavior for AI/ML applications, it is necessary to discuss how to collect information within the 5GS according to the application's request (e.g., preferred time of day to perform FL behavior, region for FL behavior) and provide assistance information to the AF, such as a list of candidate UEs for FL behavior and recommended time of day for FL behavior.

It may be discussed whether and how the 5GS provides support to the AF and/or UE to manage FL operations and model distribution/redistribution (e.g., selecting FL members, monitoring group performance, and allocating and ensuring appropriate network resources). For reference, in various descriptions of the disclosure, the AF may be used interchangeably with Application Server (AS). This may facilitate a collaborative Application AI/ML based Federated Learning operation between an Application Client and an Application Server running on the UE.

To support FL behavior for AFs and UEs, the following examples can be discussed:

Support for UE selection for FL behavior may be discussed. For example, it may be discussed whether, how and what information the 5GC can provide to the AF to assist the AF in selecting and managing a group of UEs to be part of the FL behavior. Note that the AF may control and manage the FL group management. For example, it may be discussed whether, how, and what information is required from the 5GC to support the AF in selecting and managing UE groups to be part of the FL behavior;

Performance monitoring/exposure may be discussed. For example, monitoring and exposing UE or UE group performance (e.g., aggregated QoS parameters) related to FL behavior may be discussed. For example, it may be discussed whether and which existing or new monitoring events (e.g., QoS, location, load, congestion) are required to capture specific system performance and predictions for traffic associated with AI/ML operations for FL behavior.

FL performance can be discussed. For example, when an application server receives local ML model training information from other UEs to perform global model updates, how to support AF to improve FL performance between UEs (e.g., managing latency divergence) may be discussed.

Various solutions have been proposed to assist FL operations of AI/ML applications in the 5GS. For example, it has been proposed to provide information related to FL by collecting information in the 5GS based on the application's request (e.g., preferred FL operation time slot (e.g., preferred time of day for FL operation), region for FL operation, and QoS information). For example, based on the request of an application, information in the 5GS is collected and information such as a list of suitable FL candidate UEs or a recommended FL time slot is proposed. In another example, it has been proposed to provide network related information (e.g., QoS, etc.) about the UEs requested by the application.

As in the example described earlier, the Network Function (NF) that collects information from the 5GS and generates assistance information to pass to the AI/ML Application Server can be the Network Data Analytics Function (NWDAF). Alternatively, such NF may be a new NF (e.g., AIML NF/NEF). In various examples of the disclosure, an AIML NF/NEF can mean an NF that generates assistance information related to AIML. AIML NF may also be used interchangeably with AIML NF or NEF. Here, a new NF may act as a separate, independent NF, or it may be an NF integrated with an existing NF, a NEF or PCF.

If NWDAF is responsible for generating assistance information, a new analytics needs to be defined. For example, the new analytics could take as input a request for assistance information from the AI/ML Application Server and information collected from the 5GC. Then, based on the new analytics, the NWDAF can collect information from the 5GC and provide assistance information to the Application Server as an output analytics in response.

It is also possible for a new NF (for example, a separate, independent NF or an NF integrated with an existing NF) to be used as the NF that generates assistance information. In this case, the new NF can receive requests for assistance information from the Application Server based on the new service operation. The new NF can then provide assistance information to the Application Server in response by collecting information from the 5GC.

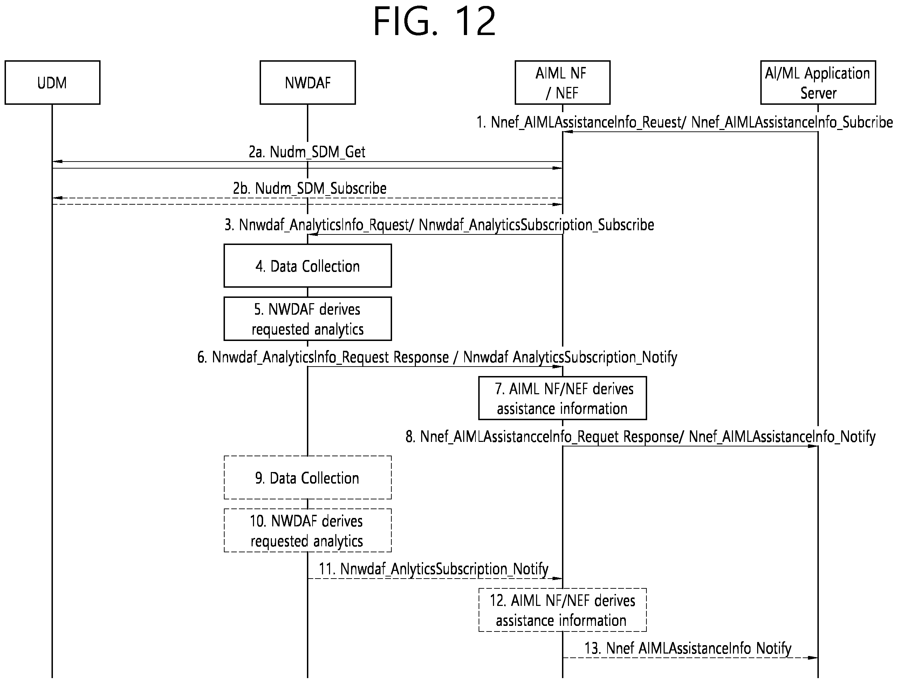

The example described below with reference to FIG. 12 is an example of an approach utilizing an NF integrated with a NEF called an AIML NF. In this example, the AIML NF collects information from the network to provide a list of recommended UEs and recommended FL time zones, regions, and the like. For example, the AIML NF can provide a recommended UE list and recommended FL time zone, region, etc. that can satisfy the conditions (QoS, region, etc.) for the UE list provided by the application.

Describes an example involving 5GS assistance information related to AF for federated learning behavior.

This example provides a solution around 5GS support for federated learning behavior.

The following is an overview of the proposed solution to provide 5GS assistance information to the AF for federated learning behavior:
- This solution introduces an AIML NF that can be deployed alongside the NEF and used for external exposure to support 5G AIML services. For example, the AIML NF can receive requests from AFs (i.e., AI/ML application servers) and respond/notify them of 5GS assistance information for AIML behavior.
- The AI/ML application server requests assistance information along with the input parameters for the FL operation. For example, the input parameters may include a list of UEs, QoS reference, geographic region, minimum number of UEs for the FL operation, preferred AIML duration, whether to request a list of candidate UEs for the FL operation, preferred time of day for AIML operation, radio access technology, signal quality, etc. For example, some FL operations may need to be performed during a specific time period, or some FL operations may not need to be performed immediately. In this case, the AI/ML application server can provide preferred AIML task durations. Also, depending on the size of the training data, the AI/ML application server can provide an estimated AIML task duration. By considering the preferred and expected AIML operation durations and predicting network conditions, such as user data congestion times, the AIML NF/NEF can derive recommended AIML operation durations.
- The AI/ML application server may subscribe (or subscribe to) AIML assistance information for FL behavior. For example, if a member UE's threshold for a QoS reference or QoS requirement cannot be met due to a change in network conditions, or if a new candidate UE is expected to be able to meet the threshold, the AI/ML application server may attempt to update the FL member UE for FL behavior after initiating FL behavior. In this case, the AIML NF/NEF provides updated assistance information (e.g., new recommended UEs) to the AI/ML application server, so that the AI/ML application server can reselect FL member UEs that can meet the QoS requirements based on the assistance information.

Based on the Subscription Correlation ID, the AI/ML application server can manage subscriptions (or subscriptions). The AI/ML application server can use the Subscription Correlation ID to update a subscription (e.g., new UE list, QoS requirements) or unsubscribe from an AIML NF/NEF.
- AIML NFs/NEFs can interact with other NFs such as NWDAF, UDM, SMF, UPF, OAM, etc. to process requests from AI/ML Application Server. Based on the collected information, the AIML NF/NEF generates assistance information for FL operation (e.g., a list of candidate UEs in the recommended time slot), thereby providing the assistance information for FL operation requested by the AI/ML Application Server.

Referring to the example in FIG. 12, an example procedure for providing 5GS assistance information for federated learning behavior is described.

FIG. 12 shows the procedure for providing 5GS assistance information to the AI/ML application server for federated learning behavior.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 12** **is an example of a procedure for providing 5GS assistance informationfor federated learning behavior, according to one embodiment of the disclosure.**
1. The AI/ML application server may request/subscribe to 5G assistance information with specific conditions for FL operation by invoking Nnef_AIMLAssistanceInfo_Request/ Nnef_AIMLAssistanceInfo_Subscribe. The AI/ML application server may request FL assistance information for the list of UEs included in the request. It can also indicate that the UE is authorized by the AI/ML Application Server (application side) for FL operation.

Input parameters of Nnef_AIMLAssistanceInfo_Request service operation are as the following:
- AF Identifier.
- UE list (GPSIs, External Group ID, or IP address).
- AF-Service-Identifier.
- External application identifier.
- QoS References or QoS requirements.
- Whether to request a list of candidate UEs (if indicated, the AIML NF/NEF will provide a list of candidate UEs in the response).
- Time when assistance information is needed (indicates to the AIML NF/NEF the latest time that the analytics consumer expects to receive the support data provided by the AIML NF/NEF).
- Expected AIML behavior time (estimated time per AI/ML application server based on training information such as training model, training data size, etc.)
- Preferred AIML behavior time periods (time periods during which the AI/ML application server wants to perform AIML operations).
- Whether to request recommended (recommended) AIML operation time periods (if indicated, the AIML NF/NEF provides recommended AIML operation time periods in the response).
- Traffic volume for downloading global model and uploading training results.
- Traffic volume for downloading global model and uploading training results.
- DNN and S-NSSAI.
- Expected UE Moving Trajectory for each UE in the UE list (e.g., planned moving path).
- Area of Interest (AIML operations for UEs within the Area of Interest).
- Minimum number of UEs required for FL behavior.
- Preferred Radio Access Technology (Access Type/RAT Type (e.g., WLAN, 5G), if the AI/ML application server expects the UE to stay for FL behavior.)
- For WLANs, the preferred signal quality (requirements of the UE radio signal for FL operation, e.g., Average received Signal Strength Indication (RSSI) and round trip time (RTT)).
- UE traffic usage (expected UE traffic usage or residual traffic range for FL behavior).

Additional input parameters for the Nnef_AIMLAssistanceInfo_Subscribe service operation are as follows
- Notification Target Address (+ Notification Correlation ID) if the AI/ML application server subscribes to an AIML NF/NEF.
- Reporting parameters (for example, periodic reporting, reporting thresholds (QoS reference or QoS requirement).

2. If the request from the AI/ML Application Server is approved, the AIML NF/NEF invokes the Nudm_SDM_Get service operation to check whether the UEs provided by the AI/ML Application Server are authorized by the 5GC to support AIML operations and whether each UE agrees to participate in FL operations from the UDM storing the UE subscription information. After receiving a successful response, the AIML NF/NEF may subscribe to notifications about modifications to the subscription data by using Nudm_SDM_Subscribe.

3. For an AIML operation, for a UE authorized by the 5GC, the AIML NF/NEF may derive assistance information by determining the appropriate analytics information and input parameters to be collected, based on the input requested in step 1. For example, the assistance information may be a list of candidate UEs that can satisfy the request of the AI/ML Application Server or a recommended coverage area in the recommended time slot.

To request/subscribe to analytics information from the NWDAF, the inputs from step 1 can be used as input parameters. For example, the QoS Criteria, Expected AIML Operating Time Period, and Preferred AIML Operating Period can be used to request QoS Sustainability analytics at that point in time. Also, for the NWDAF, "Time when assistance information is needed" may be used as an input for "Time when analytics information is needed". Global model download and training result upload traffic volume can be used to estimate the time spent on global model downloads and training result uploads.

AIML NF/NEF may request/subscribe analytics information to NWDAF in order to collect analytics information of the requested UEs (e.g., UE Communication analytics, UE Mobility analytics, User Data Congestion analytics, QoS Sustainability analytics, WLAN performance analytics per UE). If the AI/ML Application Server did not provide some of input parameters, AIML NF/NEF can derive them based on local configuration or based on analytics such as UE Mobility analytics and WLAN performance analytics per UE. If "Preferred AIML operation time periods" and "Time when assistance information is needed" are not provided as input parameters, it can be regarded as the immediate AIML operation will be performed.

4. The NWDAF collects the data for the requested Analytics IDs.

5. The NWDAF derives the requested analytics.

6. The NWDAF provides analytics response to the AIML NF/NEF.

7. AIML NF/NEF collects all the analytics information from NWDAF and derives assistance information that can satisfy the request from AI/ML Application Server taking into account, e.g., the QoS, User Data Congestion, UE mobility, the preferred AIML time periods for FL operation, preferred Wireless Access technology, preferred quality of signal, and UE traffic usage, etc.

8. AIML NF/NEF responds/notifies to the AI/ML Application Server with the derived assistance information.

The output parameters of the Nnef_AIMLAssistanceInfo_Request service operation can be as below:
- Set of the 5GS Assistance information requested by AI/ML Application Server. Each 5GS Assistance information can contain:
- Set of the 5GS Assistance information requested by AI/ML Application Server. Each 5GS Assistance information can contain:
- List of candidate UEs for FL operation.
- Recommended time period to perform AIML operation.
- Recommended area for AIML operation.
- Recommended Access type/RAT type to perform AIML operation.

Each of above information can be provided in a prioritized order to help the AI/ML Application Server to select the UEs.

The lists of candidate UEs for recommended FL operation can be different according to the recommended time period and/or the recommended area for AIML operation.

If the "time when assistance information is needed" was provided in step 1, AIML NF/NEF takes this into account in responding to the AI/ML Application Server.

Based on the received the 5GS assistance information, the AI/ML Application Server can select and manage the group of UEs, and determine the start time for FL operation.

9-13. If, in Step 1, Step 3, the AI/ML application server and the AIML NF/NEF subscribed to AIML assistance information, when NWDAF generates a new analytics, the AIML NF/NEF notifies the AI/ML application server of the new assistance information.

After FL operation starts, the AIML NF/NEF may notify new AIML assistance information (e.g., new recommended UEs) due to changed network conditions, and the AI/ML application server may reselect FL members based on that information.

According to the example in FIG. 12, the UDM may use the new subscription information to determine whether the UE is authorized for 5G AI/ML operation. An AIML NF may be co-located with a NEF. The AIML NF/NEF may use new service operations to support application AI/ML operations. NWDAF can support WLAN performance analytics per UE.

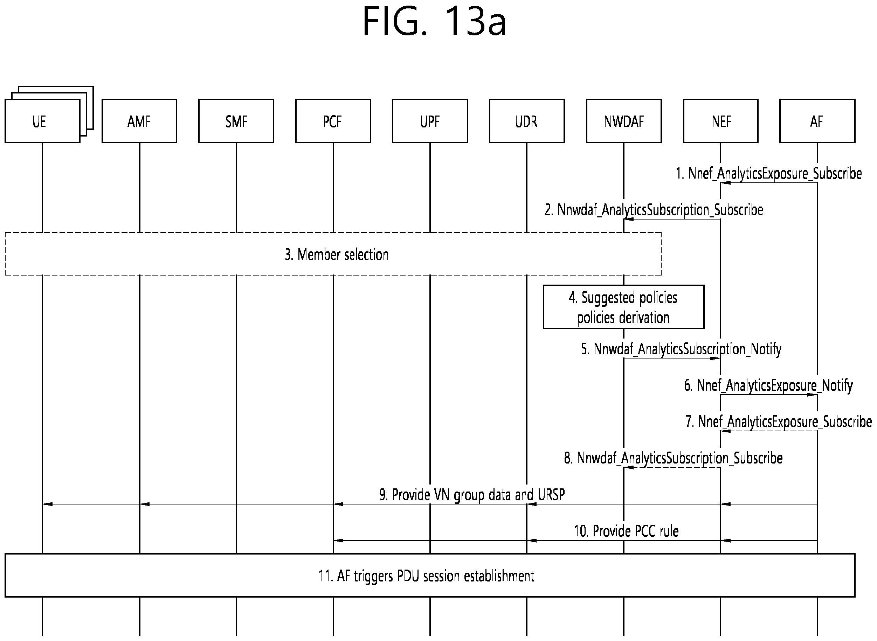

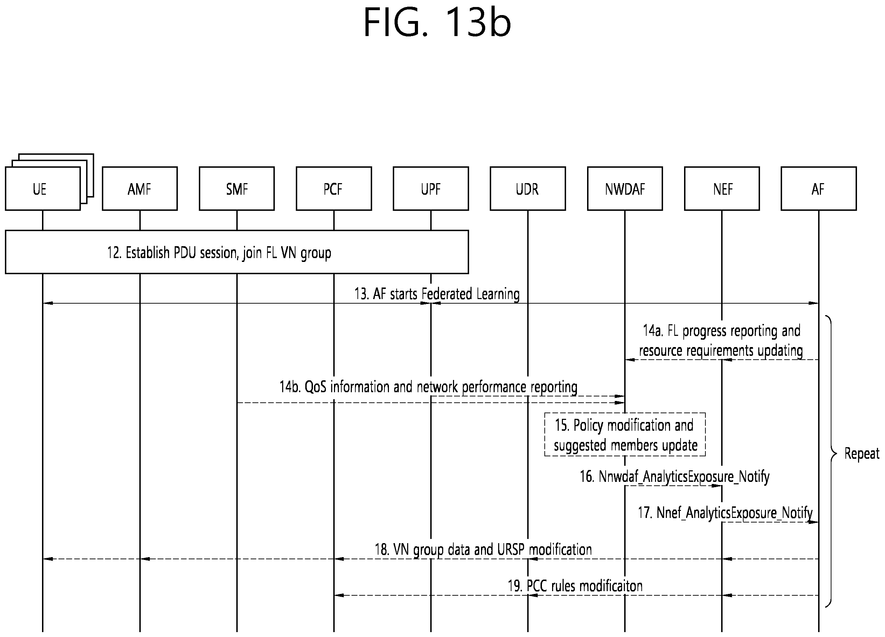

In the following, one example of providing assistance information will be described with reference to the examples of FIGS. 13a and 13b. For example, according to the examples of FIGS. 13a and 13b, a New Analytics used by the NWDAF may be defined. According to the following example, the NWDAF may receive a request from an AI/ML application server as an input of the analytics and provide assistance information to the AI/ML application server as an output. In the following example, the AF can trasmit the Member Selection Flag. If the Member selection flag is 1, the NWDAF of 5GC can provide the recommended UE list as the output of New analytics. If the Member selection flag is 0, the NWDAF may not recommend a list of members to the AIML Application Server. Instead, the NWDAF may collect information such as QoS information or network performance about the member list delivered by the Application Server and collect information from the 5GC by subscribing to the notification service for data related to other NFs such as UPF and SMF. Based on the collected information, NWDAF can deliver assistance information to AI/ML Application Server as analytics output.

Referring to the examples in FIG. 13a and FIG. 13b, an example of a 5G VN group with 5GC-enabled federated learning is described.

The following is an example of 5GS Assistance to Federated Learning Operation 5GS Assistance to Federated Learning Operation.

In federated learning (FL), multiple rounds of training and interaction are required between a central server and edge nodes (e.g., edge servers or UEs). Federated learning can be viewed as a type of group learning that does not expose the privacy of edge nodes. To improve the efficiency of federated learning, it is necessary to ensure more reliable connectivity between the edge nodes and the central server and consistency in the communication characteristics and requirements of each edge node, such as resources, bandwidth, delay, and uniform start and end of training.

The following example proposes to configure the edge nodes and central server of federated learning into a 5G virtual network (VN) group to facilitate unified management of members within the LAN group, resource allocation, access and mobility-related policies, and coordination of session management-related policies. Here, VNs may be one example of a technology for 5G networks to support group communications.

The NWDAF will provide the AF with a proposal for establishing a VN group, along with relevant policies, and may also include a list of proposed FL members if the AF needs to select members. This process requires multiple interactions with other 5GC NFs, so the AF is deeply involved.

Referring to FIG. 13a and FIG. 13b, one example of a VN group establishment procedure by an AF is described. FIGS. 13a and 13b illustrate a VN group establishment procedure initiated by an AF.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 13a** **and** **FIG. 13b** **are example procedures for establishing a VN group by an AF, according to one embodiment of the disclosure.**
1. The AF subscribes to receive analytics via NEF by invoking Nnef_AnalyticsExposure_Subscribe service operation. The parameters includes:
   1. AFs can subscribe to receive analytics through NEF by invoking the Nnef_AnalyticsExposure_Subscribe service operation. The message sent by the AF can contain the following parameters
      - Analytics ID.
      - Member selection flag: A flag indicating whether member selection is required.
      - Analytics filter information, including:
      - Member list (a list of SUPIs or group IDs, if the member selection flag is 0), candidate member list (a list of SUPIs or group IDs, if the member selection flag is 1), or all UEs (if the member selection flag is 1).
      - [Optional] Maximum and/or minimum number of members (if the Select Members flag is 1).
      - Areas of interest.
      - S-NSSAI or DNN.
      - Expected time period.
      - Information of ML model to be trained (e.g., model size).
      - The requirements of performance (e.g., bandwidth, time delay etc.).
   2. Based on the subscription from the AF, the NEF subscribes to NWDAF by invoking the Nnwdaf_AnalyticsSubscription_Subscribe service operation.
   3. If the member selection flag is 1 and the user consent is granted, NWDAF may begin to select members from the list of UE provided by AF. NWDAF may conduct "UE mobility analytics", "abnormal behaviour related network data analytics", "Network Performance Analytics", "NF load analytics", "User Data Congestion Analytics", "DN performance analytics" and other Analytics ID to select the appropriate members.
   4. NWDAF collects related analytics data and conducts analytics. Based on the analytics result, NWDAF may suggest a VN group and then derive the suggested policy related information, which may include VN group data, PCC rules related information and access and mobility related rules (e.g., URSP). If the member selection flag is 0, NWDAF may subscribe the QoS information, network performance and other related data to UPF, SMF and other related NFs on the member list. Whether NWDAF suggests the establishment of a VN group may take the SMF's capabilities on the VN group into consideration.
   5. NWDAF may notify the suggested policies to establish VN group, including PCC rules and access and mobility related policies , and the selected member list that match the analytics filter information (if the member selection flag is 1), to NEF by invoking Nnwdaf_AnalyticsSubscription_Notify service operation.
   6. The NEF notifies the analytics information to AF by invoking Nnef_AnalyticsExposure_Notify service operation.
   7. If the member selection flag is 1,AF may modify the suggested member list based on local policies. At this point,AF may cancel the previous subscription and send a new subscription to NWDAF for group monitoring on the updated member list.
   8. Based on the subscription from the AF, the NEF subscribes to NWDAF by invoking the Nnwdaf_AnalyticsSubscription_Subscribe service operation. NWDAF may subscribe the QoS information, network performance and other information to UPF, SMF and other related NFs on the updated member list.
   9. The AF may transmit VN group data, as defined in 4.15.6.3b of 3GPP TS 23.502 V17.5.0, via UDR, by using the procedure specified in clause 4.15.6.7 of TS 23.502 V17.5.0. Based on the VN group data, the PCF may generate URSP rules and deliver them to the UE using the procedure specified in clause 4.2.4.3 of TS 23.502 V17.5.0.
   10. The AF may transmit the exclusive PCC rules for the VN group defined in 6.3 of TS 23.503 V17.5.0 to the PCF via UDR using the procedure specified in TS 23.502 V17.5.0 clause 4.15.6.7.
   11. The AF may trigger the PDU session establishment procedure.
   12. A UE that has previously received a URSP rule may establish a PDU session and join (or subscribe to) a VN group, using the procedure in clause 4.3.2.2.1 of TS 23.502 V17.5.0.
   13. The VN group with established AF may start feterated learning with the selected UEs.
   14. During the learning, AF may send the FL progress and resource requirements to NWDAF via NEF. UPF, SMF and other related NF may send QoS information, network performance and other related information to NWDAF.
   15. NWDAF may modify the suggested members and policies including VN group data, PCC rules or access and mobility related policies (e.g., URSP).
   16. NWDAF notifies the updated suggested member list (if the member selection flag is "1"), the updated suggested policies to NEF by invoking Nnwdaf_AnalyticsSubscription_Notify service operation.
   17. The NEF may notify the analytics information to AF by invoking Nnef_AnalyticsExposure_Notify service operation. If AF modifies the suggested member list based on local policies, AF may cancel the previous subscription and send a new subscription on the updated member list.
   18. The AF may modify VN group data and/or members via UDR using the procedure specified in 4.15.6.7 of TS 23.502 V17.5.0. The PCF may modify the URSP rules based on the VN group data and communicate them to the UE, using the procedure specified in clause 4.2.4.3 of TS 23.502 V17.5.0.
   19. The AF may modify the PCC rules for a group of VNs using the procedures specified in paragraph 4.15.6.7 of TS 23.502 V17.5.0. FL operations may include multiple rounds of training. Steps 14 through 19 may be repeated as many times as required by the AF to NWDAF subscription requirements.

According to the examples of FIG. 13a and FIG. 13b, the NWDAF can support application federated learning-related analytics (e.g., new analytic IDs). The NEF may support receiving application federated learning related subscription requests.

There is an ongoing discussion about Federated Learning (FL). However, what has not been discussed in the past is how to efficiently perform the operations related to FL.

Terminals that support MA PDU sessions utilize both accesses (3GPP and non-3GPP). When selecting UEs to satisfy the QoS of AIML FL operation, it is necessary to have a way to prioritize UEs with MA PDU sessions.

For example, in 5GC, MA PDU Session information may be useful as information for the selection of UEs that can satisfy the QoS for the AIML FL behavior of the terminal. A terminal with MA PDU Session may have both 3GPP and non-3GPP access. Therefore, compared to terminals that use only Single PDU Session, terminals with MA PDU Session can flexibly satisfy the QoS of the terminal even if the performance of the access network changes. Therefore, the AI/ML Application Server may want to prioritize the selection of terminals that support MA PDU Session. Even if the AI/ML Application server does not explicitly request the information of the terminal with MA PDU Session, the 5GC may prioritize the terminal with MA PDU Session as a candidate UE list for FL. Therefore, in order to support FL operation of AI/ML Application in 5GC, it is necessary to provide MA PDU Session related information to AF.

In the following, an example of utilizing MA PDU sessions is described.

A Multi-Access PDU (MA PDU) session is a PDU session that can simultaneously connect to two access networks, 3GPP access and non-3GPP access (e.g., untrusted, trusted non-3GPP access, wireline 5G access), and send and receive traffic between the terminal and the data network. The MA PDU session is defined to support Access Traffic Steering, Switching and Splitting (ATSSS) technology, which enables simultaneous use of 3GPP and non-3GPP access networks to send and receive traffic between the terminal and the network.

For MA PDU sessions, two tunnels are created, one for carrying traffic over 3GPP access and one for carrying traffic over non-3GPP access. Each tunnel is independently isolated, and traffic may be forwarded using only one of them. The choice of which access tunnel to use to transmit traffic is determined by the policies determined by the network. Based on these policies, the SMF can generate ATSSS rules and N4 rules to control traffic and send them to the terminal and UPF, respectively. Based on this, the terminal can decide which access UL traffic should be sent to, and the UPF can decide which access DL traffic should be sent to.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

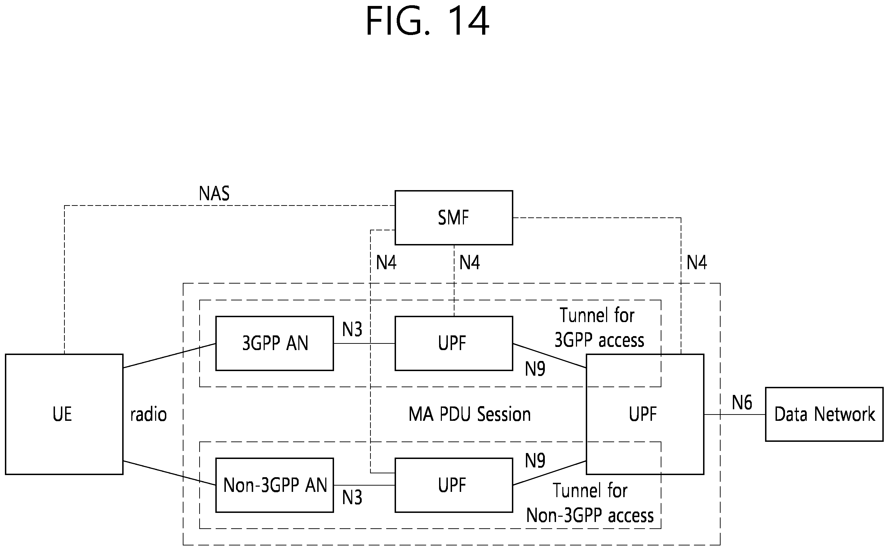

**FIG. 14** **is an example of a structure of an MA PDU session, according to one embodiment of the disclosure.**

The UE may support ATSSS, and the UE may want to enable MA PDU Session. In this case, the UE may generate a PDU Session Establishment request that includes the ATSSS capability and indicate the Request Type as "MA PDU Request" in the UL NAS Transport message when sending this request.

If the AMF supports MA PDU Session, when creating a PDU Session, the AMF may select an SMF that supports MA PDU Session. The AMF may then send a request message to the SMF by passing the "MA PDU Request" indication to the SMF and including the access type in the N1 SM container. In addition, if the UE is registered to both accesses, the AMF may inform the SMF with additional access type information.

Based on the Session Management subscriber information, the SMF may determine if the MA PDU Session is allowed. If a Dynamic PCC is used for the MA PDU Session, the SMF may send an SM Policy Control Create message to the PCF with an "MA PDU Request" indication, and the SMF may send the ATSSS capability of the MA PDU Session. The SMF may send the currently used access type, RAT type, and additional access type information to the PCF. The PCF then decides if the MA PDU Session is allowed based on the network operator policy and subscriber information.

A terminal with an MA PDU Session may have both 3GPP and non-3GPP access, so that it can communicate with the other access even if one access becomes unavailable, and the bandwidth of both accesses can be aggregated. The terminal and/or the network may perform round trip time (RTT) measurements and packet loss rate (PLR) measurements for each access network. Based on the measurements, such as RTT and PLR measurements, the terminal and/or network may determine congestion on a particular access and select an access to transmit traffic that can maximize the traffic transmission rate of the respective uplink and downlink.

Therefore, compared to terminals that use Single PDU Session, terminals that support MA PDU Session can flexibly satisfy the QoS of the terminal even when the performance of the access network changes. Therefore, the AI/ML Application Server may want to prioritize the selection of terminals that support MA PDU Session. Also, even if the AI/ML Application server does not explicitly request the information of the terminal with MA PDU Session, the 5GC may prioritize the terminal with MA PDU Session as a candidate UE list for FL.

The various examples in the present disclosure describe how 3GPP 5GC may provide the candidate UE list to the AI/ML Application Server with the terminal's MA PDU Session information, or in consideration of the MA PDU Session information, as information to support the Application AI/ML FL operation.

Various examples of the present disclosure describe how to provide 5GS assistance information (including MA PDU Session information) to an AF that supports AI and ML services. The method may comprise a combination of one or more actions/configurations/steps according to the various examples below.

The behavior described in the various examples of the disclosure in this specification may be supported by the following NFs:
- New NFs to support Application AI/ML behavior (e.g., AIML NFs); or
- NFs (e.g., AIML NF/NEF) that integrate the above new NFs or existing NFs (NEF, PCF) with functionality to support Application AI/ML behavior, or
- NWDAF.

The SMF or PCF may provide the MA PDU Session Information of the UE to the NWDAF, AIML NF/NEF, AIML NF, etc. The MA PDU Session Information may indicate whether the terminal is using an MA PDU Session, the access information for which the MA PDU Session has been established, and/or whether a single access PDU Session can be made into an MA PDU Session.

For example, MA PDU Session Information may be interpreted as information related to the UE being able to simultaneously use 3GPP access and non-3GPP access for Application AI/ML behavior/traffic support. For example, whether the UE is using MA PDU Session may be interpreted as whether the UE is simultaneously using 3GPP access and non-3GPP access to support Application AI/ML operation/traffic.

Various examples of the present disclosure, describes procedures that operate based on a new service operation over an AIML NF/NEF. In various examples of the disclosure, the behavior of an AIML NF/NEF may be supported by NWDAF. In this case, the input/output parameters of the AIML NF/NEF described below may be supported by the input/output of the new analytics in NWDAF. If the AIML NF/NEF behavior is supported by another NF, the AIML NF/NEF behavior and the parameters associated with that behavior may be supported by new service operations provided by that NF.

In the various examples disclosed herein, AI/ML service may be used interchangeably with AI/ML-based service, AI/ML traffic, AI/ML application, AI/ML transport, AI/ML operation, AI/ML operational traffic, Application AI/ML operation, Application AI/ML operational traffic, and the like.

In various examples disclosed herein, the terms user equipment (UE) and terminal may be used interchangeably.

In various examples disclosed herein, the terms Application Function (AF) and Application Server (AS) may be used interchangeably.

In the various examples disclosed herein, analytics information may be used interchangeably with analytics data, network analytics data, network analytics information, and the like.

In the following, we focus on what the various examples of the disclosure suggest. For network data analytics according to the prior art, see TS 23.288 V17.5.0.

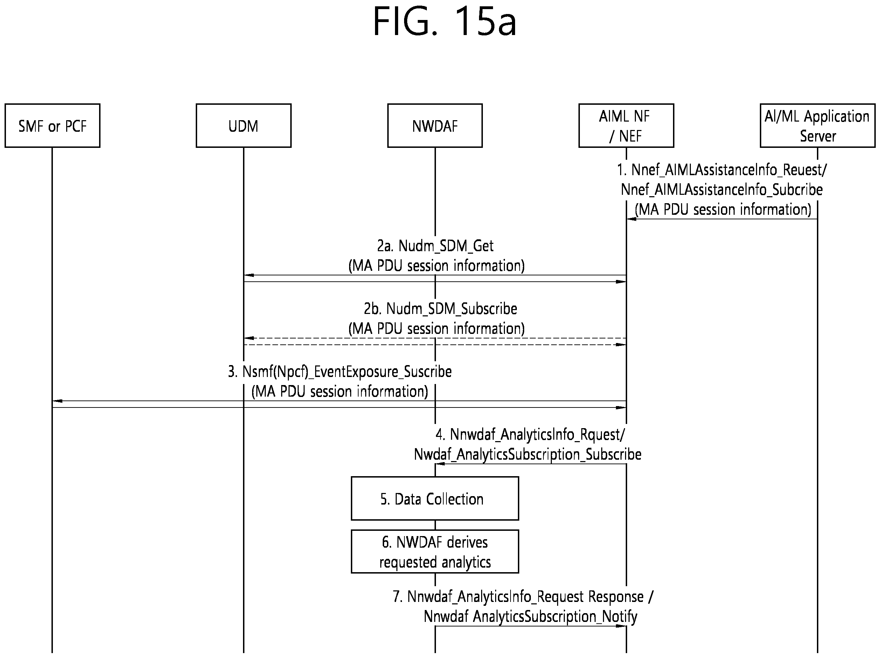

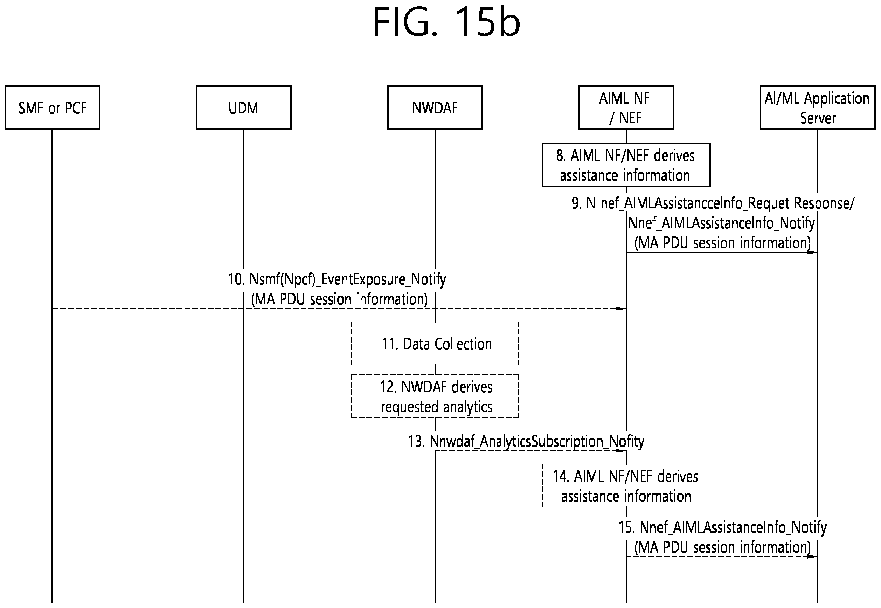

In accordance with various examples of the present disclosure, an example procedure for a 3GPP network to pass 5GC assistance information, including MA PDU Session information of a terminal, to an AI/ML Application Server is shown in FIG. 15a and FIG. 15b.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIGS. 15a** **and** **15b** **illustrate one example of a procedure for providing 5GS assistance information for federated learning operation.**

FIGS. 15a and 15b illustrate a procedure for providing 5GS assistance information, including MA PDU session information, for federated learning behavior.

Depending on what is proposed in FIGS. 15A and 15B, the operations related to steps 1, 2, 3, 9, 10, and 15 of the example of FIG. 12 described above may be modified/added. For example, step 1 of FIG. 12 may be modified such that the request from the AI/ML Application includes MA PDU Session Information. For example, step 2 of FIG. 12 may be modified such that the AIMF NF/NEF obtains subscription-related information from the UDM in the MA PDU Session Information. For example, Steps 3, 10 of FIGS. 15a and 15b may be added to obtain the MA PDU Session Information from the SMF or PCF. Steps 9, 15 of FIGS. 15a and 15b may be modified to provide information including MA PDU Session Information to the AI/ML Application Server.
1. An AI/ML application server may request assistance information in order to use AI/ML-specific behaviors (e.g., FL behaviors). For example, the AI/ML application server may send a request message requesting assistance information or a subscription request message to subscribe to a service that provides assistance information to an AIML NF/NEF. For example, an AI/ML application server may request/subscribe to 5G assistance information under certain conditions for FL operation by invoking Nnef_AIMLAssistanceInfo_Request / Nnef_AIMLAssistanceInfo_Subscribe. The AI/ML application server may request FL assistance information for the list of UEs included in the request. It can also indicate that the UE is authorized by the AI/ML Application Server (application side) for FL operation.

The Nnef_AIMLAssistanceInfo_Request service operation has the following input parameters. For example, the request message sent by the AI/ML application server may inlclude one or more of the following information, as shown in the example below:
- AF Identifier.
- UE list (GPSIs, External Group ID, or IP address).
- AF-Service-Identifier.
- External application identifier.
- QoS References or QoS requirements.
- Whether to request a list of candidate UEs (if indicated, the AIML NF/NEF will provide a list of candidate UEs in the response).
- Time when assistance information is needed (indicates to the AIML NF/NEF the latest time that the analytics consumer expects to receive the support data provided by the AIML NF/NEF).
- Expected AIML behavior time (estimated time per AI/ML application server based on training information such as training model, training data size, etc.)
- Preferred AIML behavior time periods (time periods during which the AI/ML application server wants to perform AIML operations).
- Whether to request a recommended AIML operation time periods (if indicated, the AIML NF/NEF will provide the recommended AIML operation time periods in the response).
- Traffic volume for downloading global model and uploading training results.
- Traffic volume for downloading global model and uploading training results.
- DNN and S-NSSAI.
- Expected UE Moving Trajectory for each UE in the UE list (e.g., A planned path of movement).
- Area of Interest (AIML operation for the UEs in the area of interest).
- Minimum number of UEs needed for FL operation.
- The preferred radio access technology (if the AI/ML application server expects the UE to stay for FL operation, the access type/RAT type (e.g., WLAN, 5G, Multi-Access)). For example, the AI/ML application server may send a request message containing "Multi-Access" to the AIML NF/NEF to indicate that it prefers UEs with MA PDU sessions for FL operation.
- For WLANs, the preferred signal quality (requirements of the UE radio signal for FL operation, e.g., Average received Signal Strength Indication (RSSI) and round trip time (RTT)).
- UE traffic usage (the expected range of UE traffic usage or remaining traffic for FL operation).
- Preference for Multi-Access UEs. For example, the AI/ML application server may include preference information for multi-access UEs to indicate whether it favors UEs with MA PDU sessions.
- Multi-Access PDU Session Information of UE. The AI/ML Application Server may include "MA PDU Session Information of UE" in the request message to request assistance information from the AIML NF/NEF, including MA PDU Session Information.

The AI/ML Application Server may send a request message to the 5GC requesting assistance information. The AI/ML Application Server may include information related to the MA PDU Session in the input parameter for obtaining the 5GC assistance information. Based on the input parameter for obtaining 5GC assistance information, the ML Application Server may indicate its preference for UEs connected with both access types for which MA PDU Sessions are created/allowed/supported and request MA PDU Session information for each UE. For example, the AI/ML Application Server may include in the request message information indicating the preference for UEs connected with both access types for which MA PDU Sessions are created/allowed/supported and/or requesting MA PDU Session information for each UE. Alternatively, the AI/ML Application Server may request UEs with MA PDU Sessions, UEs that are allowed to have MA PDU Sessions, UEs that support MA PDU Sessions, or UEs that are connected with both access types as a recommended candidate UE list. The request from the AI/ML Application Server can be sent to the AIML NF/NEF.

Additional input parameters for the Nnef_AIMLAssistanceInfo_Subscribe service operation are as follows
- Notification Target Address (+ Notification Correlation ID) if the AI/ML application server subscribes to an AIML NF/NEF.
- Reporting parameters (for example, periodic reporting, reporting thresholds (QoS reference or QoS requirement).

If the request from the AI/ML Application Server is approved, the AIML NF/NEF invokes the Nudm_SDM_Get service operation to check whether the UEs provided by the AI/ML Application Server are authorized by the 5GC to support AIML operations and whether each UE agrees to participate in FL operations from the UDM stored in the UE subscription information. After receiving a successful response, the AIML NF/NEF may subscribe to notifications about modifications to the subscription data by using Nudm_SDM_Subscribe.

The AIML NF/NEF may decide to collect information related to MA PDU Session for FL candidate UEs. For example, the AIML NF/NEF may decide to collect information related to MA PDU Sessions for FL candidate UEs if there is a request from the AI/ML Application Server for information related to the UE's MA PDU Session. Alternatively, even if no such request is explicitly made, the AIML NF/NEF may decide to collect information related to MA PDU Sessions for FL candidate UEs based on preset information. The AIML NF/NEF may subscribe to the notification service (Event Exposure) of each UDM/SMF/PCF with an Event ID to obtain (or receive) information related to MA PDU Session from the UE's UDM/SMF/PCF. New Event IDs associated with MA PDU Session Information may be defined, and the AIML NF/NEF may receive information related to MA PDU Sessions from the UDM/SMF/PCF by sending these new Event IDs. The AIML NF/NEF may subscribe to receive information related to the MA PDU Session from the UDM/SMF/PCF on a one-time basis or periodically or whenever there is a change in the information.

The MA PDU Session information Event may include the following information for a specific DNN/S-NSSAI. The MA PDU Session information Event may be an event based on the new Event ID associated with the MA PDU Session Information described earlier. For example, an MA PDU Session information Event may be an event that provides MA PDU Session Information to an AIML NF/NEF. The MA PDU Session Information may include one or more of the following examples of information
- Whether the UE supports MA PDU sessions: The AIML NF/NEF can receive from the SMF or PCF whether the UE supports MA PDU sessions.
- whether MA PDU session is allowed by the UE (e.g., information related to whether the UE accepts MA PDU sessions): The AIML NF/NEF may receive information related to whether or not the MA PDU Session is allowed, from the SMF or UDM. For example, whether the MA PDU session is allowed may be stored in "Indicates whether MA PDU session establishment is allowed" in the ATSSS information contained in the SM subscription data.
- Whether the UE's MA PDU session is currently established: The AIML NF/NEF may receive information related to whether the UE's MA PDU session is currently established from the SMF or PCF.

The AIML NF/NEF may obtain information from the SMF and/or the PCF, such as the following examples. For example, the AIML NF/NEF may obtain the following information from the PCF by utilizing the PCF's Access Type Change Event. For example, the AIML NF/NEF may obtain MA PDU Session information from the SMF, by extending the SMF's Access Type Change Event to include the PCF's Access Type Change Event to obtain MA PDU Session information:
- Information related to which access type the UE's MA PDU Session is connected to (e.g., 3gpp, non-3gpp, both);
   AIML NFs/NEFs may obtain additional access types via AdditionalAccessInfo in the Access Type Change Event of a PCF. "AdditionalAccessInfo" is not currently defined in the SMF's Access Type Change Event, but it can be extended like the PCF. For example, an AdditionalAccessInfo parameter can be newly defined in the Access Type Change Event used by the SMF. Based on the AdditionalAccessInfo parameter, additional access type information can be provided. For example, additional access type information may be added to the default access type information to indicate that it is a Multi-Access PDU session; and/or

The conventional Access Type, AdditionalAccessInfo, does not indicate whether the user plane resource of the MA PDU Session is actually allocated. For example, an MA PDU Session may be generated while the terminal is registered in both accesses. In such a situation, the user plane resource may be released when the terminal enters the CM-IDLE state in the 3GPP access due to the inactivity timer. Therefore, a new service may be used to indicate whether the actual user plane resource is set up. Especially for non-3GPP access, the network may not be able to establish the user plane resource when the terminal enters the IDLE state, so the actual establishment of the user plane resource may be important. For example, the AS may be aware of whether the actual user plane resource has been established or not.

The AIML NF/NEF may know whether the PDU session of the DNN/S-NSSAI used by the UE for FL operation supports MA PDU sessions, whether it is connected to an MA PDU session, and/or information related to what access type the PDU session is connected to.

4. The AIML NF/NEF may request analytical information from the NWDAF to derive assistance information. To do so, the AIML NF/NEF may send a request message to the NWDAF requesting analytics information, or the AIML NF/NEF may send a subscription request message to the NWDAF to subscribe to a service that sends analytics information.

For example, for an AIML operation, for a UE authorized by the 5GC, the AIML NF/NEF may derive assistance information, based on the input requested in step 1, by determining the appropriate analytics information and input parameters to be collected. For example, the assistance information may be a list of candidate UEs that can satisfy the request of the AI/ML Application Server or a recommended coverage area in the recommended time slot.

To request/subscribe to analytics information from the NWDAF, the inputs from step 1 can be used as input parameters. For example, the QoS Criteria, Expected AIML Operating Time Period, and Preferred AIML Operating Period can be used to request QoS sustainability analytics at that point in time. Also, for the NWDAF, "Time when assistance information is needed" may be used as an input for "Time when analytics information is needed". Global model download and training result upload traffic volume can be used to estimate the time spent on global model downloads and training result uploads.

The AIML NF/NEF may request/subscribe analytics information to the NWDAF to collect the requested UE's analytics information (e.g., UE communication analytics, UE mobility analytics, user data congestion analytics, QoS sustainability analytics, per-UE WLAN performance analytics). If some input parameters are not provided by the AI/ML application server, the AIML NF/NEF can derive them based on local configuration, or based on analytics such as UE mobility analytics and WLAN performance analytics per UE. If 'Preferred AIML operation time periods' and 'Time when assistance information is needed' are not provided as input parameters, it can be assumed that the AIML operation is performed immediately.

5. The NWDAF may collect the data for the requested Analytics IDs.

6. The NWDAF may derive the requested analytics.

7. The NWDAF may provide analytics response to the AIML NF/NEF.

8. AIML NF/NEF may collect all analytics information from NWDAF and derive assistance information to satisfy the request of AI/ML Application Server by considering QoS, user data congestion, UE mobility, preferred AIML time zone for FL operation, preferred radio access technology, preferred signal quality and UE traffic usage, etc.

9. The AIML NF/NEF may respond/notify the AI/ML application server of the derived assistance information.

Based on MA PDU Session information together with other network information (e.g., network analytics information from NWDAF, etc.), AIML NF/NEF may generate assistance information to be delivered to AI/ML Application Server. The AIML NF/NEF can then forward the assistance information to the AI/ML Application Server.

The output parameters of the Nnef_AIMLAssistanceInfo_Request service operation can be as below:
- Set of the 5GS Assistance information requested by AI/ML Application Server. Each 5GS Assistance information can contain:
   - Set of the 5GS Assistance information requested by AI/ML Application Server. Each 5GS Assistance information can include:
      - List of candidate UEs for FL operation.
      - Recommended time period to perform AIML operation.
      - Recommended area for AIML operation.
      - Recommended Access type/RAT type to perform AIML operation.
      - Multi Access PDU Session information (For example, the MA PDU session information can be MA PDU session information for one or more UEs included in the candidate list.)

For a complete list of UEs received from the AI/ML Application Server, the AIML NF/NEF may transmit MA PDU Session information of all UEs or MA PDU Session information of nominated candidate UEs to the AI/ML Application Server. For example, the MA PDU Session information may include whether the UE supports MA PDU Session, whether the UE allows MA PDU Session, whether the UE's MA PDU Session is connected, and/or the access type to which the UE is currently connected. Alternatively, the AIML NF/NEF may not send the MA PDU Session information directly to the AI/ML Application Server, but when the AIML NF/NEF selects candidate UEs, the AIML NF/NEF may consider the MA PDU Session information (e.g., prioritize UEs with MA PDU Sessions) when recommending a list of UEs.

Even if the AIML NF/NEF does not send the MA PDU Session information directly to the AI/ML Application Server, the AIML NF/NEF may consider the MA PDU Session information to recommend a list of candidate UEs. In this case, the AIML NF/NEF may also consider the Preferred Wireless Access technology information sent by the AI/ML Application Server in step 1. For example, the AIML NF/NEF may generate a list of candidate UEs based on the AI/ML Application Server as shown in the example below (if the AI/ML Application Server does not transmit the Preferred Wireless Access technology, the AIML NF/NEF may determine the Preferred Wireless Access technology according to the AIML NF/NEF internal settings or as preset, and perform the action of generating a list of candidate UEs). Hereinafter, reference is made to the first example to the third example:

As a first example, the AI/ML Application Server may request the AIML NF/NEF to select 40 UEs from a list of 100 UEs and send the information that the Preferred Wireless Access technology is Multi-Access to the AIML NF/NEF. In Step 8, the AIML NF/NEF may select more UEs than the number requested by the AI/ML Application Server by considering the MA PDU Session information and the analytics information (e.g., QoS, User Data Congestion, UE mobility, etc.) obtained from the NWDAF, and perform operations 1) to 4) below after selecting more UEs that can satisfy the requirements of the AI/ML Application Server. For example, the AIML NF/NEF may first select more UEs (50 UEs) than 40 UEs that can satisfy the requirements of the AI/ML Application Server. Then, the AIML NF/NEF may perform any of the actions in examples 1) through 4) below for these 50 UEs:
1) The AIML NF/NEF may firstly choose UEs (e.g., 10 UEs)whose PDU sessions for AI/ML operation were created as MA PDU sessions and are connected with both 3GPP Access and Non-3GPP Access,
2) AIML NF/NEF is connected with 3GPP Access or Non-3GPP Access, but uses MA PDU Session, so it is possible to select UEs (10 UEs) that can also be connected with other accesses;
3) The AIML NF/NEF may select UEs (10 UEs) for which MA PDU sessions are allowed based on subscriber information, even though MA PDU sessions have not been created;
4) There may be 20 UEs for which only Single Access PDU Session is supported/allowed. For these UEs, the AIML NF/NEF can select 10 UEs that can best satisfy the requirements of the AI/ML Application Server by considering the analytics collected in step 8, without considering the MA PDU Session information.

The AIML NF/NEF may select 40 UEs based on the same behavior as 1) through 4) above.

It should be noted that the above-described operations 1) through 4) are illustrative only, and the scope of the disclosure is not limited by the above-described operations. Based on both the MA PDU Session information and the Analytics information obtained from the NWDAF, the AIML NF/NEF may select a UE that can satisfy the needs of the /ML Application Server.

As a second example, consider a situation where the AI/ML Application Server requests 40 candidate UEs out of 100 UEs from the AIML NF/NEF, requesting the preferred wireless access technology as Multi-Access, followed by Wi-Fi. In this case, the AIML NF/NEF can select 40 UEs out of 50 UEs that can satisfy the AI/ML Application Server's requirements in the following way:
1) AIML NF/NEF prioritizes and selects UEs (10 UEs) with both 3GPP Access and Non-3GPP Access connected, where the PDU session for AI/ML operation was created as MA PDU Session;
2) AIML NF/NEF selects UEs (10 UEs) that are connected with Non-3GPP Access, connected with MA PDU Session and subsequently connected with 3GPP Access,
3) The AIML NF/NEF can select the UEs (20 UEs) that are connected with Non-3GPP Access and only Single Access PDU Session is supported/allowed. For example, there may be fewer than 20 UEs connected with Non-3GPP Access and only 10 UEs supported/allowed Single Access PDU Session. In this case, the AIML NF/NEF may select the remaining 10 UEs by first selecting UEs with MA PDU sessions among those connected to 3GPP Access (5 UEs) and then selecting UEs with Signal PDU sessions connected to 3GPP Access (5 UEs).

In the third example, the AI/ML Application Server has requested 40 UEs, but there may be fewer UEs (30) that can satisfy the AI/ML Application server's requirements (such as QoS) than 40. In such a case, the AIML NF/NEF may perform the behavior as in examples 1) and 2) below:
1) AIML NF/NEF can select up to 30 UEs that can satisfy the requirements of the application server regardless of MA PDU Session information or Preferred Wireless Access technology,
2) The AIML NF/NEF may then firstly choose the UEs that are closest to the requirements of the AI/ML Application Server as the remaining 10 UEs, without considering the MA PDU Session information or the Preferred Wireless Access technology. If there are UEs with the same degree of closeness to the requirements, the AIML NF/NEF may consider the MA PDU session information and prioritize the UEs with both 3GPP and non-3GPP connections based on the MA PDU session established. Then, the AIML NF/NEF may select the UE with which the MA PDU Session has been established and which is connected with only one access, either 3GPP or Non-3GPP. Next, the AIML NF/NEF may select the UE with Single PDU Session.

Each of the above information can be provided in order of priority to help the AI/ML application server select UEs.

The list of candidate UEs for recommended FL behavior may vary depending on the recommended time period and/or the recommended area for AIML operation.

To respond to the AI/ML Application Server, if a 'time when assistance information is needed' is provided in step 1, the AIML NF/NEF may consider it.

Based on the received 5GS assistance information, the AI/ML application server can select and manage UE groups and determine the start time of FL behavior.

10. the AIML NF/NEF may have subscribed to the notification services of the UDM, SMF, and/or PCF. In this case, the AI/ML Application Server may receive MA PDU session information from the UDM, SMF, and/or PCF while the FL behavior of the application is in progress. For example, while the FL behavior of the application is in progress, the MA PDU session information of some or all of the UEs in the list of UEs requested by the AI/ML Application Server may change. The UDM, SMF, and/or PCF may then periodically notify the AIML NF/NEF of the MA PDU Session information of the UEs. Alternatively, the UDM, SMF and/or PCF may notify the AIML NF/NEF of the UE's MA PDU Session information if the terminal's MA PDU Session information has changed.

11-15. If, in Step 1, Step 4, the AI/ML Application Server and the AIML NF/NEF subscribed (or subscribed) to AIML assistance information, then when the NWDAF generates a new analytics, the AIML NF/NEF can notify the AI/ML Application Server of the new assistance information. Note that steps 11 through step 15 as the NWDAF performs the new analytics can be performed in the same manner as steps 5 through step 9 described earlier.

In step 14, the AIML NF/NEF may generate new assistance information. The AIML NF/NEF may provide the new assistance information to the AI/ML application server in the same way as in step 9, taking into account the updated MA PDU Session information. For example, a UE that was connected to only one (3GPP or non-3GPP) access may be connected to both accesses by additionally connecting to the other access. In this case, the AIML NF/NEF may include that UE in the additional recommended UEs. In another example, a UE that was connected to both accesses may be disconnected from one access. In this case, the AIML NF/NEF may exclude this UE from the Recommended UE List, taking into account the access preference. Alternatively, if UEs that were not connected with MA PDU Session are connected with MA PDU Session, the AIML NF/NEF may consider adding these UEs as candidate UEs.

For example, an AIML NF/NEF may transmit a list of UEs and MA PDU session information together to an AI/ML application server. Based on the new MA PDU Session information and information gathered from other NFs (e.g., NWDAF), the AIML NF/NEF may generate new assistance information.

After FL operation starts, the AIML NF/NEF may inform new AIML assistance information (e.g., new recommended UEs) due to changed network conditions, and the AI/ML application server may reselect FL members based on the information.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

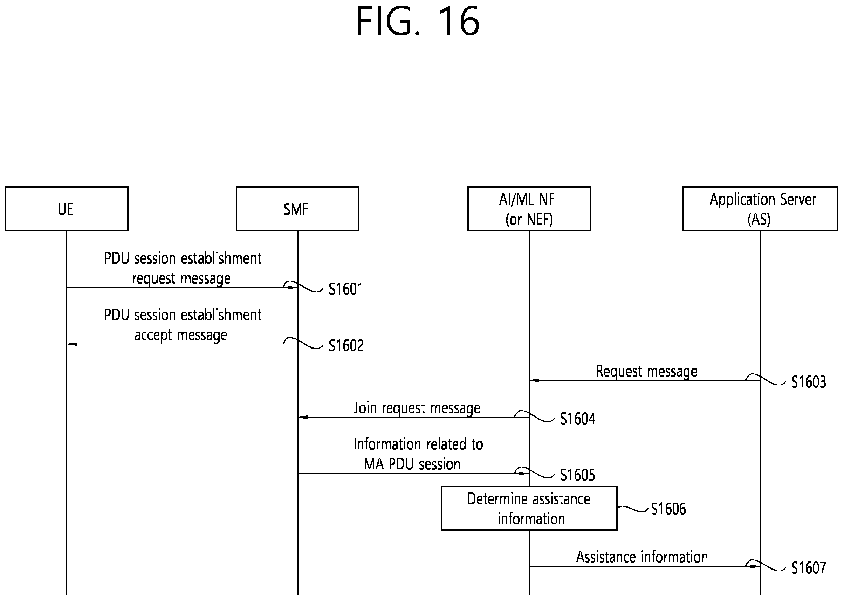

**FIG. 16** **illustrates an example of a procedure for providing assistance information based on MA PDU session information, in accordance with one embodiment of the disclosure.**

It should be noted that the procedure shown in FIG. 16 is illustrative only, and the scope of the disclosure is not limited by the example in FIG. 16.

For example, for the example of FIG. 16, the operations described in the examples of FIGS. 12 through 15b may also be applied. For example, any behavior, content, etc. described in the various examples of the disclosure may be applied, even if the behavior, content, etc. is not directly described in the example of FIG. 16.

Note that PCF and UDM are omitted in the example of FIG. 16, but the operation of PCF and UDM can also be performed in the procedure according to the example of FIG. 16.

In the example of FIG. 16, step S1604 and step S1605 may be performed by the PCF.

In step S1601, the UE may send a PDU session establishment request message to the SMF.

In step S1602, the SMF may send a PDU session establishment acceptance message to the UE. In FIG. 16, only one UE is shown, but this is for illustrative purposes only. The SMF may perform the operations according to steps S1601, S1602 with one or more UEs.

In step S1603, the application server may send a request message to the AIML NF (or NEF). The request message may include information that it is requesting the UE list and MA PDU session information.

For example, the request message may further include information related to the preferred radio access technology. For example, the preferred radio access technology information may further include one of WLAN, 5G, or Multi-Access.

For example, the request message may further include information that the UE with MA PDU session, the UE that supports MA PDU session, the UE that allows MA PDU session, and the UE connected with two access types are preferred.

In step S1604, the AIML NF (or NEF) may send a subscription request message to the SMF. The subscription request message may be a request to subscribe to an event to receive MA PDU session information of UEs in a list of UEs received from the application server.

For example, the MA PDU session information may include one or more of the following information: information related to whether the UE supports MA PDU sessions, information related to whether the UE allows MA PDU sessions, information related to whether an MA PDU session has been established for the UE, and/or information related to which access type the UE's MA PDU session, if established, is associated with.

In step S1605, the SMF may send MA PDU session information to the AIML NF (or NEF). For example, the join request message may include a list of UEs. The SMF may transmit MA PDU session information associated with the UEs included in the UE list.

In step S1606, the AIML NF (or NEF) may determine assistance information based on the MA PDU session information. The assistance information may include a list of candidate UEs for FL behavior. The AIML NF (or NEF) may determine the assistance information based on the MA PDU session information, as previously described in various examples.

In step S1607, the AIML NF (or NEF) may transmit the assistance information to the application server. Based on the assistance information, the application server may determine UEs to participate in the FL behavior and may request network resources for the determined UEs from the 5GS (e.g., a 5G network including network nodes such as SMF, UPF, PCF, etc.).

In accordance with various embodiments of the present disclosure, the NF of the 5GC (e.g., AIML NF, NWDAF, etc.) may collect MA PDU session information of the terminal from the SMF/PCF/UDM (e.g., "whether the terminal supports MA PDU sessions, whether the terminal allows MA PDU sessions, whether the terminal's MA PDU session is currently established, and to which access type the terminal's MA PDU session is connected (3GPP, Non-3GPP, Both)").

According to various embodiments of the present disclosure, the NF of the 5GC (AIML NF, NWDAF, etc.) may provide the MA PDU Session information of the obtained terminal to the AF.

According to various embodiments of the present disclosure, the NF of the 5GC (AIML NF, NWDAF, etc.) may provide a list of candidate UEs for FL to the AF, taking into account the obtained MA PDU Session information of the terminal.

According to various embodiments of the present disclosure, the various operations described in the present disclosure may be performed by new NFs (e.g., AIML NFs) to support Application AI/ML operations. Alternatively, the various behaviors described in the disclosure may be supported by new NFs or NFs whose functionality is integrated with existing NFs (NEFs, PCFs) (e.g., AIML NF/NEFs) or NWDAFs.

For example, various behaviors described in the present disclosure may be supported by a new NF for AI/ML or by an NF that is integrated with an existing NF. In this case, the new NF or integrated NF may operate based on a new service operation. Alternatively, if the various operations described in the disclosure are supported by an NWDAF, the NWDAF may operate based on new analytics.

According to various embodiments of the disclosure, the AI/ML Application Server may provide a list of UEs when requesting assistance information to the 5GC for member selection for FL operation. The AI/ML Application Server may also request the MA PDU Session information of the UEs. Alternatively, the AI/ML Application server may request a list of candidate UEs, prioritizing UEs with MA PDU Sessions, UEs that are allowed to have MA PDU Sessions, UEs that support MA PDU Sessions, or UEs connected with both access types. The request from the AI/ML Application Server may be forwarded to the AIML NF/NEF.

In accordance with various embodiments of the present disclosure, the AIML NF/NEF determines if any of the requests received from the AI/ML Application server are requests for MA PDU Session information. If there is a request for MA PDU Session information for a UE from the AI/ML Application Server, or even if there is no explicit request, the AIML NF/NEF may decide to collect MA PDU Session information for FL candidate UEs based on preset information.

According to various embodiments of the present disclosure, the AIML NF may obtain (e.g., receive) information related to the MA PDU Session of each UE of one or more of the following examples, from the UDM/SMF/PCF:
- Information related to whether the UE supports MA PDU Session,
- Information related to whether the UE's MA PDU Session is allowed;
- Information related to whether the UE's MA PDU session is currently established;
- information related to which access type the UE's MA PDU Session is connected to (3gpp, non-3gpp, both).

According to various embodiments of the present disclosure, the AIML NF/NEF may collect information, such as Network Analytics, from other NFs (e.g., NWDAF, . . .). The AIML NF/NEF may then generate assistance information to pass to the AI/ML Application Server, and may pass the assistance information to the AI/ML Application Server. For example, the AIML NF/NEF may forward to the AI/ML Application Server a complete list of UEs or a recommended list of UEs, including MA PDU Session information of each UE, for a list of UEs received from the AI/ML Application Server. Alternatively, the AIML NF/NEF may not forward the MA PDU Session information to the AI/ML Application Server, but may forward a list of recommended UEs to the AI/ML Application Server that takes into account the MA PDU Session information of the UEs.

In accordance with various embodiments of the disclosure, if the AIML NF/NEF subscribes to the notification service of the SMF/PCF, the AIML NF/NEF may be notified of the changed MA PDU Session information of the terminal if the MA PDU Session information of the terminal has changed. Accordingly, the AIML NF/NEF can forward the new assistance information to the AI/ML Application Server if the assistance information to be forwarded to the AI/ML Application Server is changed.

According to various embodiments of the disclosure, the AI/ML Application Server may select UEs to participate in the FL based on the MA PDU Session information of the UEs, and may determine a time to start and/or a time to perform the FL operation. The AI/ML Application Server may then request network resources for the FL from the 5GS for the selected UEs.

The present disclosurecan have a variety of effects.

For example, the AI/ML Application Server may request MA PDU Session related information from the 5GS for FL operation. The 5GC can send the MA PDU Session information to the AI/ML Application Server along with the information in the 5G System (5GS). Based on the received information, the Application Server may prioritize terminals with MA PDU Session advantages when selecting UEs to participate in FL, and may request network resources for FL from the 5GS for the selected UEs.

For example, by prioritizing terminals using MA PDU sessions for FL operations, FL operations can be used efficiently. For example, when the AI/ML Application Server requests the information required for FL operation from the 5GS, the AI/ML Application Server can request the information related to MA PDU session together. Then, the AIML NF/NEF of the 5GS can collect the information in the 5GS, including the MA PDU session information, and provide the AI/ML Application server with the MA PDU session information of the UEs participating in the FL. Alternatively, the AIML NF/NEF in the 5GS may provide the AI/ML application server with a list of UEs considering the MA PDU session information. Based on the received information, the Application Server can then select UEs to join the FL and request network resources from the 5GS for the FL.

The effects that may be obtained from the specific examples of the present disclosure are not limited to those listed above. For example, there may be a variety of technical effects that a person having ordinary skill in the related art may understand or infer from the present disclosure. Accordingly, the specific effects of the present disclosure are not limited to those expressly set forth herein, but may include a variety of effects that may be understood or inferred from the technical features of the present disclosure.

For reference, the operation of the terminal (e.g., UE) described in the present specification may be implemented by the apparatus of FIGS. 1 to 4 described above. For example, the terminal (e.g., UE) may be the first device 100 or the second device 200 of FIG. 2. For example, an operation of a terminal (e.g., UE) described herein may be processed by one or more processors 102 or 202 . The operation of the terminal described herein may be stored in one or more memories 104 or 204 in the form of an instruction/program (e.g., instruction, executable code) executable by one or more processors 102 or 202 . One or more processors 102 or 202 control one or more memories 104 or 204 and one or more transceivers 105 or 206, and may perform the operation of the terminal (e.g., UE) described herein by executing instructions/programs stored in one or more memories 104 or 204.

In addition, instructions for performing an operation of a terminal (e.g., UE) described in the present disclosure of the present specification may be stored in a non-volatile computer-readable storage medium in which it is recorded. The storage medium may be included in one or more memories 104 or 204 . And, the instructions recorded in the storage medium may be executed by one or more processors 102 or 202 to perform the operation of the terminal (e.g., UE) described in the present disclosure of the present specification.

For reference, the operation of a network node (e.g., AMF, SMF, UPF, PCF, AI/ML Application Server (AS), AIML NF, AIML NF/NEF, NEF, UDM, DN, NWDAF, UDR, new NF, etc.) or base station (e.g., NG-RAN, gNB, etc.) described herein may be implemented by the apparatus of FIGS. 1 to 3 to be described below. For example, a network node or a base station may be the first device 100 of FIG.2 or the second device 200 of FIG.2. For example, the operation of a network node or base station described herein may be processed by one or more processors 102 or 202. The operation of the terminal described herein may be stored in one or more memories 104 or 204 in the form of an instruction/program (e.g., instruction, executable code) executable by one or more processors 102 or 202. One or more processors 102 or 202 may perform the operation of a network node or a base station described herein, by controlling one or more memories 104 or 204 and one or more transceivers 106 or 206 and executing instructions/programs stored in one or more memories 104 or 204.

In addition, instructions for performing the operation of the network node or base station described in the present disclosure of the present specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the above, preferred embodiments have been exemplarily described, but the present disclosure of the present specification is not limited to such specific embodiments, and thus, modifications, changes, or may be improved.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

## Claims

1. A method for performing communication, perforemd by a Network Functions (NF) related to Artificial Intelligence (AI) and Machine Learning (ML) and comprising:
receiving a request message requesting assistance information from an AI/ML Application Server (AS),
wherein the request message includes a list of User Equipment (UE) including one or more UE and information related to requesting Multi Access (MA) Protocol Data Unit (PDU) session information for the one or more UEs,
transmitting a subscription request message for events related to the MA PDU session information to a Session Management Function (SMF);
receiving the MA PDU session information from the SMF; and
determining assistance information, based on the MA PDU session information,.

2. The method of claim 1, further comprising:
transmitting the assistance information to the AI/ML AS.

3. The method of claim 1 or 2,
wherein the assistance information include a list of candidate UE for Federated Learning (FL) operation.

4. The method of any one of claims 1 to 3,
wherein the assistance information includes a list of candidate UE for the federated learning (FL) operation and MA PDU session information realted to at least one UE included in the list of candidate UE .

5. The method of any one of claims 1 to 4,
wherein the MA PDU session information includes one or more of the following:
information related to whether each of the one or more UEs supports the MA PDU session, information related to whether each of the one or more UEs allows the MA PDU session, information related to whether an MA PDU session has been established for each of the one or more UEs, and/or information related to which access type and/or RAT type one or more of the UEs are connected to, if an MA PDU session has been established.

6. The method of any one of claims 1 to 5,
wherein the determining further comprising:
firstly inlcuding at least one UE having the MA PDU session based on the MA PDU session in a list of candidate UE.

7. The method of any one of claims 1 to 6,
wherein the request message further includes the Preferred Wireless Access technology information,
wherein the Preferred Wireless Access technology information includes an access type and/or a RAT type related to wireless access technology.

8. The method of any one of claims 1 to 7,
wherein the request message further includes information related to a preference for a UE having an MA PDU session, a UE supporting the MA PDU session, a UE allowing the MA PDU session, and/or a UE related to two access types/RAT types.

9. A network function (NF) related to artificial intelligence (AI) and machine learning (ML), wherein the NF comprising:
one or more transceivers;
one or more processors; and
one or more memories that store instructions and are operably coupled to the one or more processors,
based on the instructions being executed by the at least one processor, perform operations comprising: the method of any one of claims 1 to 7.

10. A method for performing communciation, the method performed by a Session Management Function (SMF) and comprising:
receiving a PDU session establishment request message from a user equipment (UE) to establish a Protocol Data Unit (PDU);
transmitting a PDU session establishment accept message to the UE;
receiving a subscription request message for events associated with Multi Access (MA) PDU session information, from a Network Function (NF) associated with Artificial Intelligence (AI) and Machine Learning (ML); and
transmitting the MA PDU session information associated with one or more UEs including the UE to the NF,
wherein the MA PDU session information is used by the NF to determine assistance information for an AI/ML Application Server (AS).

11. The method of claim 10,
wherein the MA PDU session information includes one or more of the following:
information related to whether each of the one or more UEs supports the MA PDU session, information related to whether each of the one or more UEs allows the MA PDU session, information related to whether an MA PDU session has been established for each of the one or more UEs, and/or information related to which access type and/or RAT type one or more of the UEs are connected to, if an MA PDU session has been established.

12. The method of any one of claims 9 to 11,
if the MA PDU session information changes, transmitting the changed MA PDU session information to the NF.

13. A Session Management Function (SMF) for performing communication, wherein the SMF comprising:
one or more transceivers;
one or more processors; and
one or more memories that store instructions and are operably coupled to the one or more processors,
based on the instructions being executed by the at least one processor, perform operations comprising: the method of any one of claims 9 to 12.

14. A method for performing communication, the method performed by a User Equipment (UE) and comprising:
transmitting a protocol data unit (PDU) session establishment request message for establishing a protocol data unit (PDU) session to a session management function (SMF); and
receiving a PDU session establishment accept message from the SMF,
wherein the PDU session is a Multi Access (MA) PDU session,
wherein the PDU session establishment accept message is used by the SMF to transmit the MA PDU session information related to one or more UEs including the UE to a Network Function (NF) related to Artificial Intelligence (AI) and Machine Learning (ML), when the SMF receives a subscription request message for an event related to the MA PDU session information from the the NF.

15. A user equipment (UE) configured to operate in a wireless communication system, the UE comprising:
one or more transceivers;
one or more processors; and
one or more memories that store instructions and are operably coupled to the one or more processors,
based on the instructions being executed by the at least one processor, perform operations comprising: the method of claim 14.
